(19) Europäisches Patentamt / European Patent Office / Office européen des brevets

(11) **EP 4 462 933 B1**

(12) **EUROPEAN PATENT SPECIFICATION**

(45) Date of publication and mention of the grant of the patent:
**11.02.2026 Bulletin 2026/07**

(21) Application number: **22923613.8**

(22) Date of filing: **26.12.2022**

(51) International Patent Classification (IPC):
**H04W 74/00** (2009.01)    **H04W 56/00** (2009.01)
**H04W 74/08** (2024.01)    **H04W 74/0833** (2024.01)

(52) Cooperative Patent Classification (CPC):
**H04W 74/00; H04W 56/0045; H04W 74/004;
H04W 74/08; H04W 74/0833**

(86) International application number:
**PCT/CN2022/141911**

(87) International publication number:
**WO 2023/142827 (03.08.2023 Gazette 2023/31)**

(54) **PREAMBLE TRANSMISSION METHOD, APPARATUS AND SYSTEM**

PRÄAMBELÜBERTRAGUNGSVERFAHREN, -VORRICHTUNG UND -SYSTEM

PROCÉDÉ, APPAREIL ET SYSTÈME DE TRANSMISSION DE PRÉAMBULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.01.2022 CN 202210096810**

(43) Date of publication of application:
**13.11.2024 Bulletin 2024/46**

(73) Proprietor: Huawei Technologies Co., Ltd.
Shenzhen, Guangdong 518129 (CN)

(72) Inventors:
• HU, Yuanzhou
Shenzhen, Guangdong
518129 (CN)
• XU, Xiuqiang
Shenzhen, Guangdong
518129 (CN)
• WANG, Lei
Shenzhen, Guangdong
518129 (CN)

(74) Representative: Maiwald GmbH
Engineering
Elisenhof
Elisenstrasse 3
80335 München (DE)

(56) References cited:
WO-A1-2021/026931    CN-A- 108 809 597
CN-A- 112 672 433    US-A1- 2020 137 807

• ERICSSON: "4-step random access procedure", 3GPP DRAFT; R1-1714043_4-STEP RANDOM ACCESS PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20170821 - 20170825, 20 August 2017 (2017-08-20), Mobile Competence Centre ; 650, route des Lucioles ; F-06921 Sophia-Antipolis Cedex ; France , XP051316835
• MODERATOR (THALES): "FL Summary on enhancements on UL time and frequency synchronization for NR", 3GPP DRAFT; R1-2102215, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205, 8 February 2021 (2021-02-08), Mobile Competence Centre ; 650, route des Lucioles ; F-06921 Sophia-Antipolis Cedex ; France , XP051977777

**Description**

**TECHNICAL FIELD**

This application relates to the communication field, and in particular, to a preamble transmission method.

**BACKGROUND**

Usually, terminal devices establish connections to a network device by using random access procedures (random access procedures), to achieve uplink synchronization. Specifically, the terminal device sends a random access preamble (random access preamble) (briefly referred to as "preamble" below) to the network device to request random access. The network device may estimate a transmission delay between the network device and the terminal device based on the received preamble, determine timing advance (timing advance, TA) information based on the transmission delay, and send the TA information to the terminal device. The terminal device may determine, based on the received TA information, time at which data is sent to the network device. For example, a TA value corresponding to a terminal device far from the network device is larger, in other words, the terminal device far from the network device needs to send data to the network device earlier; and a TA value corresponding to a terminal device near the network device is smaller, in other words, the terminal device near the network device may send data to the network device later. In this way, time at which data sent by different terminal devices to the network device arrives at the network device may be consistent, to implement the uplink synchronization. The US 2020/137807 A1 refers to an apparatus and a method for a random access in a wireless communication system. The WO 2021/026931 A1 refers to a method and a device for determining random access resources.

In a conventional technology, a preamble of one cell is usually a Zad-off Chu (ZC) sequence, and a quantity of preambles is limited. For example, a quantity of preambles in a new radio system is 64. One preamble may be uniquely determined based on a root of the ZC sequence and a cyclic shift, and different preambles correspond to different combinations of roots of the ZC sequence and cyclic shifts. A quantity of roots of the ZC sequence is limited by a length of the ZC sequence. For a specific root, a quantity $N_{CS}$ of cyclic shifts that can be used satisfies the following formula (1):

$$N_{CS} = \left\lfloor L_{RA} / N_{Step}^{CS} \right\rfloor \qquad \text{formula (1),}$$

where

$L_{RA}$ represents the length of the ZC sequence; $N_{Step}^{CS}$ represents a step of cyclic shift values; and $\lfloor \ \rfloor$ represents rounding down.

However, the step $N_{Step}^{CS}$ of the cyclic shift values is limited by a cell radius, or may be limited by a maximum transmission delay between the terminal device and the network device. Specifically, a larger cell radius indicates a larger transmission delay between the network device and a terminal device that is farthest from the network device and that is in the cell. In other words, a larger TA value corresponding to the terminal device that is farthest from the network device correspondingly indicates a larger value of $N_{Step}^{CS}$. It can be learned from the foregoing formula (1) that, when the length $L_{RA}$ of the ZC sequence is fixed, a larger value of $N_{Step}^{CS}$ indicates a smaller value of $N_{CS}$, so that a quantity of preamble cyclic shifts is smaller, and a total quantity of preambles is also smaller, that is, a preamble capacity is insufficient.

**SUMMARY**

Embodiments of this application provide a preamble transmission method, an apparatus, and a system, to increase a quantity of available preambles. The invention is set out in the appended set of claims.

To achieve the foregoing objectives, the following technical solutions are used in embodiments of this application.

According to a first aspect, a preamble transmission method is provided. An apparatus for performing the preamble transmission method may be a terminal device, or may be a module, for example, a chip or a chip system, used in a terminal device. The following uses an example in which an execution body is the terminal device for descriptions. The terminal device obtains first information. The first information includes at least one of the following: historical timing advance TA information, geographical location information, or power information of the terminal device. The terminal device determines one group of preambles from $K_G$ groups of preambles based on the first information. $K_G$ is an integer greater than 1, a total quantity of preambles in the $K_G$ groups of preambles is positively correlated with a quantity of preamble cyclic shifts, and the quantity of preamble cyclic shifts is positively correlated with the quantity $K_G$ of groups of preambles. The terminal device sends a first preamble in the one group of preambles to a network device.

In the preamble transmission method provided in this embodiment of this application, the terminal device may design the $K_G$ groups of preambles, and $K_G$ is the integer greater than 1. However, in a conventional technology, there is only one group of preambles, that is, $K_G = 1$. In this method, because the total quantity of preambles in the $K_G$ groups of preambles is positively correlated with the quantity of preamble cyclic shifts, and the quantity of preamble cyclic shifts is positively correlated with the quantity $K_G$ of groups of preambles, the quantity of preamble cyclic shifts may be increased by increasing the quantity of groups of preambles, to further increase the total quantity of preambles. That is, in comparison with the conventional technology, the method provided in this embodiment of this application can increase a preamble capacity.

With reference to the first aspect, according to the present invention, that the terminal device determines one group of preambles from $K_G$ groups of preambles based on the first information includes: The terminal device determines a first parameter based on the first information, and determines the one group of preambles from the $K_G$ groups of preambles based on a correspondence between the first parameter and the $K_G$ groups of preambles. In this solution, the first parameter is introduced, so that the terminal device can select one group of preambles from a plurality of groups of preambles as a candidate to-be-sent preamble.

With reference to the first aspect, in a possible implementation, an i$^{th}$ group of preambles in the $K_G$ groups of preambles corresponds to at least one piece of TA information, and at least one TA value corresponding to the i$^{th}$ group of preambles is different from at least one TA value corresponding to a j$^{th}$ group of preambles. Both i and j are non-negative integers less than $K_G$, and values of i and j are different. In this solution, there is a correspondence between the groups of preambles and TA information, so that the terminal device can determine the first parameter, to be specific, one piece of TA information, based on the first information, and determine the one group of preambles corresponding to the first parameter.

With reference to the first aspect, in a possible implementation, the i$^{th}$ group of preambles in the $K_G$ groups of preambles corresponds to a first TA value range, and the first TA value range corresponding to the i$^{th}$ group of preambles does not overlap a second TA value range corresponding to the j$^{th}$ group of preambles. Both i and j are the non-negative integers less than $K_G$, and the values of i and j are different.

With reference to the first aspect, in a possible implementation, a range of the first TA value range is related to the quantity $K_G$ of groups of preambles and a maximum TA value. In this solution, when the first TA value range is designed, the quantity $K_G$ of groups of preambles and the maximum TA value are considered, so that $K_G$ TA value ranges corresponding to the $K_G$ groups of preambles can be designed in a range from 0 to the maximum TA value.

With reference to the first aspect, in a possible implementation, the first information is the historical TA information of the terminal device, and the first parameter is the historical TA information of the terminal device. In this solution, when the first information is the historical TA information of the terminal device, the first parameter is equivalent to the first information, and no conversion is required.

With reference to the first aspect, in a possible implementation, the first information is the geographical location information of the terminal device, and the geographical location information of the terminal device is a distance between the terminal device and the network device. That the terminal device determines a first parameter based on the first information includes: The terminal device determines the first parameter based on the distance between the terminal device and the network device, a cell radius of a cell in which the terminal device is located, and a maximum TA value. The first parameter is TA information, and the first parameter is the same as one of at least one piece of TA information corresponding to the one group of preambles determined from the $K_G$ groups of preambles. In this solution, when the first information is the geographical location information of the terminal device, the first parameter is not equivalent to the first information, and the first information needs to be converted by using the cell radius of the cell in which the terminal device is located and the maximum TA value, to obtain the first parameter.

With reference to the first aspect, in a possible implementation, the distance between the terminal device and the network device, the cell radius of the cell in which the terminal device is located, and the maximum TA value satisfy the following relationship:

$$P_{1st} = \frac{r_{UE}}{r_{cell}} T_{A,\max} ,$$

where

$P_{1st}$ represents the first parameter; $r_{UE}$ represents the distance between the terminal device and the network device; $r_{cell}$ represents the cell radius of the cell in which the terminal device is located; and $T_{A,\max}$ represents the maximum TA value.

With reference to the first aspect, in a possible implementation, the first information is the historical TA information of the terminal device and the geographical location information of the terminal device, and the geographical location information of the terminal device is a distance between the terminal device and the network device. That the terminal device determines a first parameter based on the first information includes: The terminal device determines the first parameter based on a historical TA value of the terminal device, the distance between the terminal device and the network device, a cell radius of a cell in which the terminal device is located, and a maximum TA value. The first parameter is TA information, and the first parameter is the same as one of at least one piece of TA information corresponding to the one group of preambles determined from the $K_G$ groups of preambles. In this solution, when the first information is the historical TA information of the terminal device and the geographical location information of the terminal device, the first parameter is not equivalent to the first information, and the first information needs to be converted by using the cell radius of the cell in which the terminal device is located and the maximum TA value, to obtain the first parameter.

With reference to the first aspect, in a possible implementation, the historical TA value of the terminal device, the distance between the terminal device and the network device, the cell radius of the cell in which the terminal device is located, and the maximum TA value satisfy the following relationship:

$$P_{1st} = \left( T_{A,old} + \frac{r_{UE}}{r_{cell}} T_{A,\max} \right) / 2,$$

where

$P_{1st}$ represents the first parameter; $T_{A,\text{old}}$ represents the historical TA value of the terminal device; $r_{UE}$ represents the distance between the terminal device and the network device; $r_{cell}$ represents the cell radius of the cell in which the terminal device is located; and $T_{A,\max}$ represents the maximum TA value.

With reference to the first aspect, in a possible implementation, an $i^{th}$ group of preambles in the $K_G$ groups of preambles corresponds to at least one radius value, and the at least one radius value corresponding to the $i^{th}$ group of preambles is different from at least one radius value corresponding to a $j^{th}$ group of preambles. Both i and j are non-negative integers less than $K_G$, and values of i and j are different. In this solution, there is a correspondence between the $K_G$ groups of preambles and radius values, so that the terminal device can determine the first parameter, in other words, one radius value, based on the first information, and determine the one group of preambles corresponding to the first parameter.

With reference to the first aspect, in a possible implementation, the $i^{th}$ group of preambles in the $K_G$ groups of preambles corresponds to a first radius value range, and the first radius value range corresponding to the $i^{th}$ group of preambles does not overlap a second radius value range corresponding to the $j^{th}$ group of preambles. Both i and j are the non-negative integers less than $K_G$, and the values of i and j are different.

With reference to the first aspect, in a possible implementation, a range of the first radius value range is related to the quantity $K_G$ of groups of preambles and a cell radius of a cell in which the terminal device is located. In this solution, when the first radius value range is designed, the quantity $K_G$ of groups of preambles and the cell radius are considered, so that $K_G$ radius value ranges corresponding to the $K_G$ groups of preambles can be designed in a range from 0 to the cell radius.

With reference to the first aspect, in a possible implementation, the first information is the geographical location information of the terminal device, the geographical location information of the terminal device is a distance between the terminal device and the network device, and the first parameter is the geographical location information of the terminal device. In this solution, when the first information is the distance between the terminal device and the network device, the first parameter is equivalent to the first information, and no conversion is required.

With reference to the first aspect, in a possible implementation, the first information is the historical TA information of the terminal device. That the terminal device determines a first parameter based on the first information includes: The terminal device determines the first parameter based on a historical TA value of the terminal device, a cell radius of a cell in which the terminal device is located, and a maximum TA value. The first parameter is a radius value, and the first parameter is the same as one of at least one radius value corresponding to the one group of preambles determined from the $K_G$ groups of preambles. In this solution, when the first information is the historical TA information of the terminal device, the first parameter is not equivalent to the first information, and the first information needs to be converted by using the cell radius of the cell in which the terminal device is located and the maximum TA value, to obtain the first parameter.

With reference to the first aspect, in a possible implementation, the distance between the terminal device and the network device, the cell radius of the cell in which the terminal device is located, and the maximum TA value satisfy the following relationship:

$$P_{1st} = \frac{T_{A,old}}{T_{A,\max}} r_{cell},$$

where

$P_{1st}$ represents the first parameter; $T_{A,old}$ represents the historical TA value of the terminal device; $T_{A,max}$ represents the maximum TA value; and $r_{cell}$ represents the cell radius of the cell in which the terminal device is located.

With reference to the first aspect, in a possible implementation, the first information is the historical TA information of the terminal device and the geographical location information of the terminal device, and the geographical location information of the terminal device is a distance between the terminal device and the network device. That the terminal device determines a first parameter based on the first information includes: The terminal device determines the first parameter based on a historical TA value of the terminal device, the distance between the terminal device and the network device, a cell radius of a cell in which the terminal device is located, and a maximum TA value. The first parameter is a radius value, and the first parameter is the same as one of at least one radius value corresponding to the one group of preambles determined from the $K_G$ groups of preambles. In this solution, when the first information is the historical TA information of the terminal device and the geographical location information of the terminal device, the first parameter is not equivalent to the first information, and the first information needs to be converted by using the cell radius of the cell in which the terminal device is located and the maximum TA value, to obtain the first parameter.

With reference to the first aspect, in a possible implementation, the historical TA value of the terminal device, the distance between the terminal device and the network device, the cell radius of the cell in which the terminal device is located, and the maximum TA value satisfy the following relationship:

$$P_{1st} = \left( \frac{T_{A,old}}{T_{A,max}} r_{cell} + r_{UE} \right) / 2 ,$$

, where
$P_{1st}$ represents the first parameter; $T_{A,old}$ represents the historical TA value of the terminal device; $T_{A,max}$ represents the maximum TA value; $r_{cell}$ represents the cell radius of the cell in which the terminal device is located; and $r_{UE}$ represents the distance between the terminal device and the network device.

With reference to the first aspect, in a possible implementation, the quantity of preamble cyclic shifts and the quantity $K_G$ of groups of preambles satisfy the following relationship:

$$N_{CS} = \left\lfloor L_{RA} / \left( \left\lfloor N_{Step}^{CS,Ini} / K_G \right\rfloor \right) \right\rfloor ,$$

where

$N_{CS}$ represents the quantity of preamble cyclic shifts; $L_{RA}$ represents a length of the preamble; $N_{Step}^{CS,Ini}$ represents a basic step of cyclic shifts; and $\lfloor \: \rfloor$ represents rounding down; or
the quantity of preamble cyclic shifts and the quantity $K_G$ of groups of preambles satisfy the following relationship:

$$N_{CS} = K_G N_{CS}^{Ini} ,$$

where

$N_{CS}^{Ini}$ represents a basic quantity of cyclic shifts, and $N_{CS}^{Ini}$ is a positive integer greater than 1. The quantity $N_{CS}$ of preamble cyclic shifts is positively correlated with the quantity $K_G$ of groups of preambles. When the quantity $K_G$ of groups of preambles is increased, the quantity $N_{CS}$ of preamble cyclic shifts may be correspondingly increased. Because the total quantity of preambles is positively correlated with the quantity of preamble cyclic shifts, an increase in the quantity $N_{CS}$ of cyclic shifts causes an increase in the total quantity of preambles, thereby achieving a technical effect of increasing the preamble capacity.

With reference to the first aspect, in a possible implementation, the $i^{th}$ group of preambles in the $K_G$ groups of preambles is first arranged in ascending order of cyclic shift indexes, and then arranged in ascending order of root indexes, and an $(i+1)^{th}$ group of preambles in the $K_G$ groups of preambles is arranged sequentially after the $i^{th}$ group of preambles is arranged; in a value range $\left[ iN_{CS}^{Ini} - i, (i+1)N_{CS}^{Ini} - 1 - i \right]$ of cyclic shift indexes, the $i^{th}$ group of preambles in the $K_G$ groups of preambles is first arranged in ascending order of the cyclic shift indexes, and then arranged in ascending order of root indexes; or the $i^{th}$ group of preambles in the $K_G$ groups of preambles is first arranged in ascending order of cyclic shift indexes, where the cyclic shift indexes are incremented by an interval of $K_G$, and then is arranged in ascending order of root indexes, and the ith group of preambles in the $K_G$ groups of preambles is the same as the jth group of preambles. In this solution, regular arrangement helps the terminal device select a to-be-sent preamble, and also helps the network device detect the preamble.

According to a second aspect, a preamble transmission method is provided. An apparatus for performing the preamble transmission method may be a network device, or may be a module, for example, a Bluetooth chip or a chip system, used in a network device. The following uses an example in which an execution body is the network device for descriptions. The network device receives a first preamble, and determines a first time-domain channel based on the first preamble. The first time-domain channel includes $N_{CS}$ regions. The network device determines, based on a correspondence between the $N_{CS}$ regions of the first time-domain channel and cyclic shift indexes of $K_G$ groups of preambles, a cyclic shift index and a group sequence number that are of the first preamble. A pth cyclic shift of an ith group of preambles in the $K_G$ groups of preambles corresponds to a $((p + i) \bmod N_{CS})$[th] region of the first time-domain channel, mod represents a modulo operation, and $N_{CS}$ represents a quantity of cyclic shifts.

In the preamble transmission method provided in this embodiment of this application, when the network device detects the preamble, the pth cyclic shift of the ith group of preambles in the $K_G$ groups of preambles corresponds to the $((p+i) \bmod N_{CS})$[th] region of the first time-domain channel. That is, correspondences between cyclic shift values or cyclic shift indexes of different groups of preambles and regions are different. Specifically, the region corresponding to the pth cyclic shift of the ith group of preambles is offset by i regions compared with a region corresponding to a pth cyclic shift of a 0th group of preambles. In this way, the network device can still determine a group number corresponding to a cyclic shift, and therefore, can correctly detect a preamble, and avoid a collision between different groups of preambles.

With reference to the second aspect, in a possible implementation, the network device determines a TA value based on the group sequence number and the first preamble, and sends the TA value to a terminal device. In this solution, the network device determines the TA value by referring to the first preamble and the group sequence number, so that the TA value corresponding to the first preamble can be accurately calculated.

According to a third aspect, another preamble transmission method is provided. An apparatus for performing the preamble transmission method may be a terminal device, or may be a module, for example, a chip or a chip system, used in a terminal device. The following uses an example in which an execution body is the terminal device for descriptions. The terminal device obtains first information. The first information includes at least one of the following: historical timing advance TA information, geographical location information, or power information of the terminal device. The terminal device determines a first TA value based on the first information, and determines, based on the first TA value, first time at which a first preamble is sent to a network device. The first preamble is one of $N_{all}^{root}$ preambles, and $N_{all}^{root}$ is a positive integer greater than 1. The terminal device sends the first preamble to the network device at the first time.

In the preamble transmission method provided in this embodiment of this application, the terminal device determines the first TA value based on the first information, and determines, based on the first TA value, the first time at which the first preamble is sent to the network device. In comparison with a conventional technology, the terminal device calculates the TA value in advance and sends the first preamble to the network device, so that a second TA value determined by the network device is small. In other words, the second TA value determined by the network device is far less than a maximum TA value in the conventional technology, and therefore, a cell radius is reduced. As described in the background, a smaller cell radius indicates an increase in a total quantity of preambles, and therefore, a preamble capacity is improved.

With reference to the third aspect, in a possible implementation, that the terminal device determines a first TA value based on the first information includes: The terminal device determines the first TA value based on the first information and a third parameter. The third parameter is positively correlated with a total quantity $N_{all}^{root}$ of preambles and a quantity of preamble cyclic shifts, and the third parameter is a positive integer greater than 1. Because the third parameter is positively correlated with the quantity $N_{all}^{root}$ of preambles and the quantity of preamble cyclic shifts, the total quantity of preambles may be increased by increasing the third parameter, or the quantity of cyclic shifts may be increased by increasing the third parameter, to further increase the total quantity of preambles.

With reference to the third aspect, in a possible implementation, the first information is a historical TA value of the terminal device. That the terminal device determines a first TA value based on the first information includes: The terminal device determines the historical TA value of the terminal device as the first TA value. In this solution, when the first information is the historical TA value of the terminal device, the first TA value is equivalent to the first information, and no conversion is required.

With reference to the third aspect, in a possible implementation, the first information is not the historical TA information of the terminal device. That the terminal device determines the first TA value based on the first information and a third parameter includes: The terminal device determines a fourth parameter based on the first information. The terminal device determines the first TA value based on the third parameter, the fourth parameter, and a maximum TA value. In this solution, in this solution, when the first information is not the historical TA information of the terminal device, the first TA value is not equivalent to the first information, and the first information needs to be first converted into the fourth parameter, so that the first TA value can be further obtained.

With reference to the third aspect, in a possible implementation, the $N_{all}^{root}$ preambles are first arranged in ascending order of cyclic shift indexes, and then arranged in ascending order of root indexes. In this solution, a manner for arranging the preambles is still a manner used in the conventional technology, and can be compatible with the conventional technology.

With reference to the third aspect, in a possible implementation, the third parameter, the fourth parameter, the maximum TA value, and the first TA value satisfy the following relationship:

$$T_{A,1} = \frac{T_{A,\max}}{K_3} \left\lfloor K_3 K_4 / T_{A,\max} \right\rfloor,$$

where

$T_{A,1}$ represents the first TA value; $T_{A,\max}$ represents the maximum TA value; $K_3$ represents the third parameter; $K_4$ represents the fourth parameter; and $\lfloor\ \rfloor$ represents rounding down.

With reference to the third aspect, in a possible implementation, the method further includes: The terminal device receives a second TA value from the network device. The terminal device adds the first TA value and the second TA value, to obtain a third TA value. The terminal device sends the third TA value to the network device. The third TA value in this application is a TA value determined by the network device in the conventional technology. Clearly, the second TA value determined by the network device in this application is less than a TA value determined by a network device in the conventional technology, so that a cell radius is reduced, and a preamble capacity is improved.

According to a fourth aspect, another preamble transmission method is provided. An apparatus for performing the preamble transmission method may be a network device, or may be a module, for example, a Bluetooth chip or a chip system, used in a network device. The following uses an example in which an execution body is the network device for descriptions. The network device receives a first preamble, and determines a first time-domain channel based on the first preamble. The first time-domain channel includes $N_{CS}$ regions. The network device determines a cyclic shift index of the first preamble based on a correspondence between the $N_{CS}$ regions of the first time-domain channel and cyclic shift indexes of preambles. A pth cyclic shift corresponds to a pth region of the first time-domain channel. The network device determines a second TA value based on the cyclic shift index and a root index that are of the first preamble. The network device sends the second TA value to a terminal device.

In the preamble transmission method provided in this embodiment of this application, the correspondence that is on a network device side and that is between the $N_{CS}$ regions of the first time-domain channel and the cyclic shift indexes of the preambles and a method for determining the second TA value are still in a conventional technology, and can be compatible with the conventional technology. A difference from the conventional technology is that the second TA value determined by the network device is far less than a maximum TA value in the conventional technology. Therefore, this is equivalent to reducing a cell radius. As described in the background, a smaller cell radius indicates an increase in a total quantity of preambles, and therefore, a preamble capacity is improved.

According to a fifth aspect, a terminal device is provided to implement the foregoing method. The terminal device includes a corresponding module, unit, or means (means) for implementing the foregoing method. The module, unit, or means may be implemented by hardware or software, or implemented by hardware executing corresponding software. The hardware or the software includes one or more modules or units corresponding to the foregoing functions.

With reference to the fifth aspect, in a possible implementation, the terminal device includes: a transceiver module and a processing module. The processing module is configured to obtain first information. The first information includes at least one of the following: historical timing advance TA information, geographical location information, or power information of the terminal device. The processing module is further configured to determine one group of preambles from $K_G$ groups of preambles based on the first information. $K_G$ is an integer greater than 1, a total quantity of preambles in the $K_G$ groups of preambles is positively correlated with a quantity of preamble cyclic shifts, and the quantity of preamble cyclic shifts is positively correlated with the quantity $K_G$ of groups of preambles. The transceiver module is configured to send a first preamble in the one group of preambles to a network device.

With reference to the fifth aspect, according to the present invention, that the processing module is further configured to determine one group of preambles from $K_G$ groups of preambles based on the first information includes: The processing module is configured to determine a first parameter based on the first information, and determine the one group of preambles from the $K_G$ groups of preambles based on a correspondence between the first parameter and the $K_G$ groups of preambles.

With reference to the fifth aspect, in a possible implementation, an $i^{th}$ group of preambles in the $K_G$ groups of preambles corresponds to at least one piece of TA information, and at least one TA value corresponding to the $i^{th}$ group of preambles is different from at least one TA value corresponding to a $j^{th}$ group of preambles. Both i and j are non-negative integers less than $K_G$, and values of i and j are different.

With reference to the fifth aspect, in a possible implementation, the $i^{th}$ group of preambles in the $K_G$ groups of preambles corresponds to a first TA value range, and the first TA value range corresponding to the $i^{th}$ group of preambles does not overlap a second TA value range corresponding to the $j^{th}$ group of preambles. Both i and j are the non-negative integers less than $K_G$, and the values of i and j are different.

With reference to the fifth aspect, in a possible implementation, a range of the first TA value range is related to the quantity $K_G$ of groups of preambles and a maximum TA value.

With reference to the fifth aspect, in a possible implementation, the first information is the historical TA information of the terminal device, and the first parameter is the historical TA information of the terminal device.

With reference to the fifth aspect, in a possible implementation, the first information is the geographical location information of the terminal device, and the geographical location information of the terminal device is a distance between the terminal device and the network device. That the processing module is further configured to determine a first parameter based on the first information includes: The processing module is configured to determine the first parameter based on the distance between the terminal device and the network device, a cell radius of a cell in which the terminal device is located, and a maximum TA value. The first parameter is TA information, and the first parameter is the same as one of at least one piece of TA information corresponding to the one group of preambles determined from the $K_G$ groups of preambles.

With reference to the fifth aspect, in a possible implementation, the distance between the terminal device and the network device, the cell radius of the cell in which the terminal device is located, and the maximum TA value satisfy the following relationship:

$$P_{1st} = \frac{r_{UE}}{r_{cell}} T_{A,\max} ,$$

where

$P_{1st}$ represents the first parameter; $r_{UE}$ represents the distance between the terminal device and the network device; $r_{cell}$ represents the cell radius of the cell in which the terminal device is located; and $T_{A,\max}$ represents the maximum TA value.

With reference to the fifth aspect, in a possible implementation, the first information is the historical TA information of the terminal device and the geographical location information of the terminal device, and the geographical location information of the terminal device is a distance between the terminal device and the network device. That the processing module is further configured to determine a first parameter based on the first information includes: The processing module is configured to determine the first parameter based on a historical TA value of the terminal device, the distance between the terminal device and the network device, a cell radius of a cell in which the terminal device is located, and a maximum TA value. The first parameter is TA information, and the first parameter is the same as one of at least one piece of TA information corresponding to the one group of preambles determined from the $K_G$ groups of preambles.

With reference to the fifth aspect, in a possible implementation, the historical TA value of the terminal device, the distance between the terminal device and the network device, the cell radius of the cell in which the terminal device is located, and the maximum TA value satisfy the following relationship:

$$P_{1st} = \left( T_{A,old} + \frac{r_{UE}}{r_{cell}} T_{A,\max} \right) / 2 ,$$

where

$P_{1st}$ represents the first parameter; $T_{A,old}$ represents the historical TA value of the terminal device; $r_{UE}$ represents the distance between the terminal device and the network device; $r_{cell}$ represents the cell radius of the cell in which the terminal device is located; and $T_{A,\max}$ represents the maximum TA value.

With reference to the fifth aspect, in a possible implementation, an $i^{th}$ group of preambles in the $K_G$ groups of preambles corresponds to at least one radius value, and the at least one radius value corresponding to the $i^{th}$ group of preambles is different from at least one radius value corresponding to a $j^{th}$ group of preambles. Both i and j are non-negative integers less than $K_G$, and values of i and j are different.

With reference to the fifth aspect, in a possible implementation, the $i^{th}$ group of preambles in the $K_G$ groups of preambles corresponds to a first radius value range, and the first radius value range corresponding to the $i^{th}$ group of preambles does not overlap a second radius value range corresponding to the $j^{th}$ group of preambles. Both i and j are the non-negative integers less than $K_G$, and the values of i and j are different.

With reference to the fifth aspect, in a possible implementation, a range of the first radius value range is related to the quantity $K_G$ of groups of preambles and a cell radius of a cell in which the terminal device is located.

With reference to the fifth aspect, in a possible implementation, the first information is the geographical location information of the terminal device, the geographical location information of the terminal device is a distance between the terminal device and the network device, and the first parameter is the geographical location information of the terminal device.

With reference to the fifth aspect, in a possible implementation, the first information is the historical TA information of the terminal device. That the processing module is further configured to determine a first parameter based on the first information includes: The processing module is configured to determine the first parameter based on a historical TA value of the terminal device, a cell radius of a cell in which the terminal device is located, and a maximum TA value. The first parameter is a radius value, and the first parameter is the same as one of at least one radius value corresponding to the one group of preambles determined from the $K_G$ groups of preambles.

With reference to the fifth aspect, in a possible implementation, the distance between the terminal device and the network device, the cell radius of the cell in which the terminal device is located, and the maximum TA value satisfy the following relationship:

$$P_{1st} = \frac{T_{A,old}}{T_{A,\max}} r_{cell}$$

$P_{1st}$ represents the first parameter; $T_{A,old}$ represents the historical TA value of the terminal device; $T_{A,\max}$ represents the maximum TA value; and $r_{cell}$ represents the cell radius of the cell in which the terminal device is located.

With reference to the fifth aspect, in a possible implementation, the first information is the historical TA information of the terminal device and the geographical location information of the terminal device, and the geographical location information of the terminal device is a distance between the terminal device and the network device. That the processing module is further configured to determine a first parameter based on the first information includes: The processing module is configured to determine the first parameter based on a historical TA value of the terminal device, the distance between the terminal device and the network device, a cell radius of a cell in which the terminal device is located, and a maximum TA value. The first parameter is a radius value, and the first parameter is the same as one of at least one radius value corresponding to the one group of preambles determined from the $K_G$ groups of preambles.

With reference to the fifth aspect, in a possible implementation, the historical TA value of the terminal device, the distance between the terminal device and the network device, the cell radius of the cell in which the terminal device is located, and the maximum TA value satisfy the following relationship:

$$P_{1st} = \left( \frac{T_{A,old}}{T_{A,\max}} r_{cell} + r_{UE} \right) / 2 ,$$

where

$P_{1st}$ represents the first parameter; $T_{A,old}$ represents the historical TA value of the terminal device; $T_{A,\max}$ represents the maximum TA value; $r_{cell}$ represents the cell radius of the cell in which the terminal device is located; and $r_{UE}$ represents the distance between the terminal device and the network device.

With reference to the fifth aspect, in a possible implementation, the quantity of preamble cyclic shifts and the quantity $K_G$ of groups of preambles satisfy the following relationship:

$$N_{CS} = \left\lfloor L_{RA} / \left( \left\lfloor N_{Step}^{CS,Ini} / K_G \right\rfloor \right) \right\rfloor ,$$

where

$N_{CS}$ represents the quantity of preamble cyclic shifts; $L_{RA}$ represents a length of the preamble; $N_{Step}^{CS,Ini}$ represents a basic step of cyclic shifts; and ⌊ ⌋ represents rounding down; or

the quantity of preamble cyclic shifts and the quantity $K_G$ of groups of preambles satisfy the following relationship:

$$N_{CS} = K_G N_{CS}^{Ini},$$

where

$N_{CS}^{Ini}$ represents a basic quantity of cyclic shifts, and $N_{CS}^{Ini}$ is a positive integer greater than 1.

With reference to the fifth aspect, in a possible implementation, the ith group of preambles in the $K_G$ groups of preambles is first arranged in ascending order of cyclic shift indexes, and then arranged in ascending order of root indexes, and an (i+1)th group of preambles in the $K_G$ groups of preambles is arranged sequentially after the ith group of preambles is arranged; in a value range $\left[ iN_{CS}^{Ini} - i, (i+1)N_{CS}^{Ini} - 1 - i \right]$ of cyclic shift indexes, the ith group of preambles in the $K_G$ groups of preambles is first arranged in ascending order of the cyclic shift indexes, and then arranged in ascending order of root indexes; or the ith group of preambles in the $K_G$ groups of preambles is first arranged in ascending order of cyclic shift indexes, where the cyclic shift indexes are incremented by an interval of $K_G$, and then is arranged in ascending order of root indexes, and the ith group of preambles in the $K_G$ groups of preambles is the same as the jth group of preambles.

For technical effects brought by any one of the possible implementations of the fifth aspect, refer to technical effects brought by different implementations of the first aspect. Details are not described herein again.

According to a sixth aspect, a network device is provided to implement the foregoing method. The network device includes a corresponding module, unit, or means (means) for implementing the foregoing method. The module, unit, or means may be implemented by hardware or software, or implemented by hardware executing corresponding software. The hardware or the software includes one or more modules or units corresponding to the foregoing functions.

With reference to the sixth aspect, in a possible implementation, the network device includes a transceiver module and a processing module. The transceiver module is configured to receive a first preamble. The processing module is configured to determine a first time-domain channel based on the first preamble. The first time-domain channel includes $N_{CS}$ regions. The processing module is further configured to determine, based on a correspondence between the $N_{CS}$ regions of the first time-domain channel and cyclic shift indexes of $K_G$ groups of preambles, a cyclic shift index and a group sequence number that are of the first preamble. A pth cyclic shift of an ith group of preambles in the $K_G$ groups of preambles corresponds to a $((p + i) \bmod N_{CS})$[th] region of the first time-domain channel, mod represents a modulo operation, and $N_{CS}$ represents a quantity of cyclic shifts.

With reference to the sixth aspect, in a possible implementation, the processing module is further configured to determine a TA value based on the group sequence number and the first preamble; and the transceiver module is further configured to send the TA value to a terminal device.

For technical effects brought by any one of the possible implementations of the sixth aspect, refer to technical effects brought by different implementations of the second aspect. Details are not described herein again.

According to a seventh aspect, a terminal device is provided to implement the foregoing method. The terminal device includes a corresponding module, unit, or means (means) for implementing the foregoing method. The module, unit, or means may be implemented by hardware or software, or implemented by hardware executing corresponding software. The hardware or the software includes one or more modules or units corresponding to the foregoing functions.

With reference to the seventh aspect, in a possible implementation, the terminal device includes a processing module and a transceiver module. The processing module is configured to obtain first information. The first information includes at least one of the following: historical timing advance TA information, geographical location information, or power information of the terminal device. The processing module is further configured to determine a first TA value based on the first information, and determine, based on the first TA value, first time at which a first preamble is sent to a network device. The first preamble is one of $N_{all}^{root}$ preambles, and $N_{all}^{root}$ is a positive integer greater than 1. The transceiver module is configured to send the first preamble to the network device at the first time.

With reference to the seventh aspect, in a possible implementation, that the processing module is further configured to determine a first TA value based on the first information includes: The processing module is configured to determine the first TA value based on the first information and a third parameter. The third parameter is positively correlated with a total quantity $N_{all}^{root}$ of preambles and a quantity of preamble cyclic shifts, and the third parameter is a positive integer greater than 1.

With reference to the seventh aspect, in a possible implementation, the first information is a historical TA value of the terminal device. That the processing module is further configured to determine a first TA value based on the first information includes: The processing module is configured to determine the historical TA value of the terminal device as the first TA value.

With reference to the seventh aspect, in a possible implementation, the first information is not the historical TA information of the terminal device. That the processing module is further configured to determine the first TA value based on the first information and a third parameter includes: The processing module is configured to determine a fourth parameter based on the first information, and determine the first TA value based on the third parameter, the fourth parameter, and a maximum TA value.

With reference to the seventh aspect, in a possible implementation, the $N_{all}^{root}$ preambles are first arranged in ascending order of cyclic shift indexes, and then arranged in ascending order of root indexes.

With reference to the seventh aspect, in a possible implementation, the third parameter, the fourth parameter, the maximum TA value, and the first TA value satisfy the following relationship:

$$T_{A,1} = \frac{T_{A,\max}}{K_3} \left\lfloor K_3 K_4 / T_{A,\max} \right\rfloor,$$

where

$T_{A,1}$ represents the first TA value; $T_{A,\max}$ represents the maximum TA value; $K_3$ represents the third parameter; $K_4$ represents the fourth parameter; and L J represents rounding down.

With reference to the seventh aspect, in a possible implementation, the transceiver module is further configured to receive a second TA value from the network device. The processing module is further configured to add the first TA value and the second TA value, to obtain a third TA value. The transceiver module is further configured to send the third TA value to the network device.

For technical effects brought by any one of the possible implementations of the seventh aspect, refer to technical effects brought by different implementations of the third aspect. Details are not described herein again.

According to an eighth aspect, a network device is provided to implement the foregoing method. The network device includes a corresponding module, unit, or means (means) for implementing the foregoing method. The module, unit, or means may be implemented by hardware or software, or implemented by hardware executing corresponding software. The hardware or the software includes one or more modules or units corresponding to the foregoing functions.

With reference to the eighth aspect, in a possible implementation, the network device includes a transceiver module and a processing module. The transceiver module is configured to receive a first preamble. The processing module is further configured to determine a first time-domain channel based on the first preamble. The first time-domain channel includes $N_{CS}$ regions. The processing module is configured to determine a cyclic shift index of the first preamble based on a correspondence between the $N_{CS}$ regions of the first time-domain channel and cyclic shift indexes of preambles. A p$^{th}$ cyclic shift corresponds to a p$^{th}$ region of the first time-domain channel. The processing module is further configured to determine a second TA value based on the cyclic shift index and a root index that are of the first preamble. The transceiver module is configured to send the second TA value to a terminal device.

For technical effects brought by any one of the possible implementations of the eighth aspect, refer to technical effects brought by different implementations of the fourth aspect. Details are not described herein again.

According to a ninth aspect, a communication apparatus is provided, and includes a processor. The processor is configured to: after being coupled to a memory and reading computer instructions stored in the memory, perform the method according to any one of the first aspect, the second aspect, the third aspect, or the fourth aspect based on the instructions.

With reference to the ninth aspect, in a possible implementation, the communication apparatus further includes the memory. The memory is configured to store the computer instructions.

With reference to the ninth aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, or a related circuit.

With reference to the ninth aspect, in a possible implementation, the communication apparatus may be a chip or a chip system. When the communication apparatus is the chip system, the communication apparatus may include a chip, or may include a chip and another discrete device.

According to a tenth aspect, a computer-readable storage medium is provided. The computer-readable storage medium stores instructions. When the instructions are run on a computer, the computer is enabled to perform the method according to any one of the first aspect, the second aspect, the third aspect, or the fourth aspect.

According to an eleventh aspect, a computer program product including instructions is provided. When the computer program product runs on a computer, the computer is enabled to perform the method according to any one of the first aspect, the second aspect, the third aspect, or the fourth aspect.

According to a twelfth aspect, a communication system is provided, and includes a terminal device and a network device. The terminal device is configured to perform the preamble transmission method according to the first aspect, and the network device is configured to perform the preamble transmission method according to the second aspect.

Alternatively, the terminal device is configured to perform the preamble transmission method according to the third aspect, and the network device is configured to perform the preamble transmission method according to the fourth aspect.

For technical effects brought by any one of the possible implementations of the ninth aspect to the twelfth aspect, refer to technical effects brought by different implementations of any one of the first aspect to the third aspect. Details are not described herein again.

## BRIEF DESCRIPTION OF DRAWINGS

FIG. 1 is a first diagram of sending preambles by different terminal devices to a network device in a conventional technology;

FIG. 2 is a first diagram of detecting preambles by a network device;

FIG. 3 is a second diagram of sending preambles by different terminal devices to a network device in a conventional technology;

FIG. 4 is a second diagram of detecting preambles by a network device;

FIG. 5 is a diagram of an architecture of a communication system according to an embodiment of this application;

FIG. 6 is a diagram of structures of a network device and a terminal device according to an embodiment of this application;

FIG. 7 is a diagram of a specific structure of a terminal device according to an embodiment of this application;

FIG. 8 is a flowchart of a preamble transmission method according to an embodiment of this application;

FIG. 9 is a first diagram of a correspondence between cyclic shift indexes and regions of a first time-domain channel according to an embodiment of this application;

FIG. 10 is a second diagram of a correspondence between cyclic shift indexes and regions of a first time-domain channel according to an embodiment of this application;

FIG. 11 is a flowchart of another preamble transmission method according to an embodiment of this application; and

FIG. 12 is a diagram of a structure of a communication apparatus according to an embodiment of this application.

## DESCRIPTION OF EMBODIMENTS

For ease of understanding technical solutions in embodiments of this application, the following first briefly describes technologies or terms related to this application.

1. Preamble capacity.

In embodiments of this application, the preamble capacity is a quantity of available preambles. Necessity of increasing the preamble capacity is as follows.

When a plurality of terminal devices simultaneously send preambles to a network device to perform random access, the plurality of terminal devices may send mutually orthogonal preambles, so that the network device can determine, by detecting a preamble, which terminal device initiates a random access procedure.

In a massive connection scenario, a large quantity of terminal devices need to be supported to access a network device and complete uplink synchronization. However, a quantity of orthogonal preambles is limited. Usually, a contention-based random access procedure may be used. To be specific, each terminal device randomly selects a preamble for sending. When preambles selected by two terminal devices are the same, the network device cannot determine, based on a detected preamble, which terminal device sends the preamble. Consequently, a collision is caused. Therefore, increasing the preamble capacity can reduce a collision probability and improve preamble detection performance.

2. Existing preamble design.

In a conventional technology, a preamble sent by a terminal device is randomly selected from available preambles in a cell in which the terminal device is located. For example, a preamble $x_{u,v}$ sent by a user may satisfy the following formula (2):

$$x_{u,v}(n) = x_u\left(\left(n + C_v\right) \bmod L_{RA}\right) \qquad \text{formula (2),}$$

where

$x_u$ represents a ZC sequence whose root is $u$; $C_v$ represents a cyclic shift (which may also be referred to as a cyclic shift value), where $v$ represents a cyclic shift index; and $L_{RA}$ represents a length of the ZC sequence. It may be understood that, the formula (2) indicates that the preamble $x_{u,v}$ is obtained by performing, based on the cyclic shift $C_v$, cyclic shift processing on the ZC sequence $x_u$ whose root is $u$. It should be noted that, because the preamble is generated by performing cyclic shift processing on the ZC sequence in time domain, the length of the ZC sequence is also a length of the preamble.

The ZC sequence $x_u$ satisfies the following formula (3):

$$x_u(i) = e^{-j\frac{\pi u i(i+1)}{L_{RA}}}, i = 0,1,\dots, L_{RA}-1 \qquad \text{formula (3),}$$

where

for meanings of $u$ and $L_{RA}$, reference is made to the foregoing formula (2). Details are not described herein again.

Fourier transform may be performed on the preamble $x_{u,v}$ to obtain corresponding frequency domain data $y_{u,v}$, that is, the preamble $x_{u,v}$ and the frequency domain data $y_{u,v}$ corresponding to the preamble satisfy the following formula (4):

$$y_{u,v}(n) = \sum_{m=0}^{L_{RA}-1} x_{u,v}(m) e^{-j\frac{2\pi mn}{L_{RA}}}, n = 0,1,\dots, L_{RA}-1 \qquad \text{formula (4),}$$

where

for meanings of $u$, $v$, and $L_{RA}$, reference is made to the foregoing formula (2). Details are not described herein again.

Fourier transform may also be performed on the ZC sequence $x_u$ to obtain corresponding frequency domain data $y_u$, that is, the ZC sequence $x_u$ and the frequency domain data $y_u$ corresponding to the ZC sequence satisfy the following formula (5):

$$y_u(n) = \sum_{m=0}^{L_{RA}-1} x_u(m) e^{-j\frac{2\pi mn}{L_{RA}}} \qquad \text{formula (5)}$$

, where

for meanings of $u$ and $L_{RA}$, reference is made to the foregoing formula (2). Details are not described herein again.

With reference to the foregoing formula (2) to formula (5), it can be learned that performing cyclic shift processing in time domain is equivalent to performing phase rotation in frequency domain. Specifically, obtaining the preamble $x_{u,v}$ by performing cyclic shift processing on the ZC sequence $x_u$ by using the cyclic shift value $C_v$ is equivalent to obtaining, by performing phase rotation on the frequency domain data $y_u$ corresponding to the ZC sequence $x_u$, the frequency domain data $y_{u,v}$ corresponding to the preamble $x_{u,v}$. $y_u$ and $y_{u,v}$ satisfy the following formula (6):

$$y_{u,v}(k) = e^{j2\pi\frac{C_v}{L_{RA}}k} y_u(k), k = 0,1,\dots, L_{RA}-1 \qquad \text{formula (6),}$$

where

for meanings of $u$, $C_v$, $v$, and $L_{RA}$, reference is made to the foregoing formula (2). Details are not described herein again. It can be learned from the formula (6) that, a $k^{th}$ element $y_{u,v}(k)$ of $y_{u,v}$ can be obtained by multiplying a $k^{th}$ element $y_u(k)$ of $y_u$ by a phase factor $e^{j2\pi\frac{C_v}{L_{RA}}k}$, where there is a correspondence between a value of the phase factor $e^{j2\pi\frac{C_v}{L_{RA}}k}$ and the cyclic shift value $C_v$.

As described in the background, a combination of a root and a cyclic shift that correspond to an available preamble in a cell may be determined using a quantity of cyclic shifts.

For the root of the ZC sequence, when a value of $L_{RA}$ is a prime number, a quantity of roots of the ZC sequence whose length is $L_{RA}$ is $L_{RA}-1$ at most. In this case, a value of the root may be 1 to $L_{RA}-1$. Roots $u$ of the ZC sequence may be in one-to-one correspondence with root indexes $i_{root}$, and the value of the root $u$ may be correspondingly determined by determining a root index. For example, it is assumed that, when the length $L_{RA}$ of the ZC sequence is 139, there may be 138 roots, the root $u$ may have a value of 1 to 138, and the root index $i_{root}$ may have a value of 0 to 137. In this case, a correspondence between the roots $u$ of the ZC sequence and the root indexes $i_{root}$ may be shown in Table 1.

Table 1

| $i_{root}$ | u | | | | | | | | | | | | | | | | | | | |
|---|---|---|---|---|---|---|---|---|---|---|---|---|---|---|---|---|---|---|---|---|
| 0 to 19 | 1 | 138 | 2 | 137 | 3 | 136 | 4 | 135 | 5 | 134 | 6 | 133 | 7 | 132 | 8 | 131 | 9 | 130 | 10 | 129 |
| 20 to 39 | 11 | 128 | 12 | 127 | 13 | 126 | 14 | 125 | 15 | 124 | 16 | 123 | 17 | 122 | 18 | 121 | 19 | 120 | 20 | 119 |
| 40 to 59 | 21 | 118 | 22 | 117 | 23 | 116 | 24 | 115 | 25 | 114 | 26 | 113 | 27 | 112 | 28 | 111 | 29 | 110 | 30 | 109 |
| 60 to 79 | 31 | 108 | 32 | 107 | 33 | 106 | 34 | 105 | 35 | 104 | 36 | 103 | 37 | 102 | 38 | 101 | 39 | 100 | 40 | 99 |
| 80 to 99 | 41 | 98 | 42 | 97 | 43 | 96 | 44 | 95 | 45 | 94 | 46 | 93 | 47 | 92 | 48 | 91 | 49 | 90 | 50 | 89 |
| 100 to 119 | 51 | 88 | 52 | 87 | 53 | 86 | 54 | 85 | 55 | 84 | 56 | 83 | 57 | 82 | 58 | 81 | 59 | 80 | 60 | 79 |
| 120 to 137 | 61 | 78 | 62 | 77 | 63 | 76 | 64 | 75 | 65 | 74 | 66 | 73 | 67 | 72 | 68 | 71 | 69 | 70 | - | - |

As shown in Table 1, when $i_{root} = 0$, $u = 1$; when $i_{root} = 1$, $u = 138$; ...; when $i_{root} = 136$, $u = 69$; and when $i_{root} = 137$, $u = 70$.

The following describes how to determine the quantity of cyclic shifts. It is assumed that the quantity of cyclic shifts, in other words, a quantity of cyclic shift values $C_v$ is $N_{CS}$. To be specific, the cyclic shift index has a value of 0 to $N_{CS}$ -1, and a step of cyclic shift values, in other words, a distance between two adjacent cyclic shift values is $N_{Step}^{CS}$. In this case, the cyclic shift value $C_v$ satisfies the following formula (7):

$$C_v = v N_{Step}^{CS}, v = 0, 1, \ldots, N_{CS} - 1 \qquad \text{formula (7),}$$

where

the quantity $N_{CS}$ of cyclic shifts and the step $N_{Step}^{CS}$ of the cyclic shift values satisfy: $N_{Step}^{CS} N_{CS} \leq L_{RA}$, where $L_{RA}$ represents the length of the ZC sequence. In other words, after the length of the ZC sequence is determined, the quantity $N_{CS}$ of cyclic shifts is related to the step $N_{Step}^{CS}$ of the cyclic shift values.

In a possible implementation, the quantity $N_{CS}$ of cyclic shifts may be first determined, and then the step $N_{Step}^{CS}$ of the cyclic shift values is determined based on the quantity $N_{CS}$ of cyclic shifts. The quantity $N_{CS}$ of cyclic shifts may be preset, or may be sent by a network device to a terminal device by using signaling. Specifically, the step $N_{Step}^{CS}$ of the cyclic shift values may be determined based on the quantity $N_{CS}$ of cyclic shifts by using the following formula (8):

$$N_{Step}^{CS} = \lfloor L_{RA} / N_{CS} \rfloor \qquad \text{formula (8),}$$

where

$L_{RA}$ represents the length of the ZC sequence; and ⌊ ⌋ represents rounding down.

For example, if the quantity of cyclic shifts is: $N_{CS} = 16$, and the length of the ZC sequence is: $L_{RA} = 139$, the step of the cyclic shift values is: $N_{Step}^{CS} = 8$.

In another possible implementation, the step $N_{Step}^{CS}$ of the cyclic shift values may be first determined, and then the quantity $N_{CS}$ of cyclic shifts is determined based on the step $N_{Step}^{CS}$ of the cyclic shift values. The step $N_{Step}^{CS}$ of the cyclic shift values may be preset, or may be sent by a network device to a terminal device by using signaling. Specifically, the quantity $N_{CS}$ of cyclic shifts may be determined based on the step $N_{Step}^{CS}$ of the cyclic shift values by using the foregoing formula (1). For example, if the step of the cyclic shift values is: $N_{Step}^{CS} = 6$ , and the length of the ZC sequence is: $L_{RA}$ = 139, the quantity of cyclic shifts is: $N_{CS}$ = 23.

Usually, available preambles in a cell are first arranged in ascending order of cyclic shift indexes, and then arranged in ascending order of root indexes. For example, a start value of the cyclic shift indexes and a start value of the root indexes may be determined, and then the available preambles in the cell are first arranged in ascending order of the cyclic shift indexes based on the start value of the cyclic shift indexes, and then arranged in ascending order of the root indexes based on the start value of the root indexes. The start value of the cyclic shift indexes and/or the start value of the root indexes may be predefined, or may be sent by the network device to the terminal device by using signaling.

3. Problems in the existing preamble design.

As described in the background, because a step $N_{Step}^{CS}$ of cyclic shift values is limited by a cell radius, when a coverage area of a cell is expected to be expanded, increasing the cell radius causes an increase in a value of $N_{Step}^{CS}$ . Consequently, a quantity of cyclic shifts is reduced, that is, a preamble capacity is insufficient.

In addition, when the cell radius is fixed, a collision is introduced if the quantity of cyclic shifts is forcibly and directly increased. To be specific, when two terminal devices send preambles $x_{u,v}$ and $x_{u,v+1}$ that are obtained by shifting the same ZC sequence by two adjacent cyclic shifts, a network device that receives the preambles $x_{u,v}$ and $x_{u,v+1}$ cannot distinguish which terminal device sends a corresponding preamble. The following further describes a process in which a collision occurs when the network device detects a preamble.

After a terminal device sends frequency domain data $y_{u,v}$ of a preamble to the network device, the network device may perform channel estimation based on the received frequency domain data and a ZC sequence $x_u$ whose root is $u$, to obtain a frequency domain channel, and then convert the frequency domain channel into a time-domain channel. A specific procedure is as follows.

For ease of descriptions, noise impact is ignored, and a $k^{th}$ element in frequency domain data $\tilde{y}_{u,v}$ received by the network device satisfies the following formula (9):

$$\tilde{y}_{u,v}\left(k\right) = H_{u,v}\left(k\right) y_{u,v}\left(k\right) \qquad\qquad \text{formula (9),}$$

where
$H_{u,v}$ represents the frequency domain channel, $y_{u,v}$ represents the frequency domain data corresponding to the preamble sent by the terminal device, $u$ represents the root of the ZC sequence, and $v$ represents a cyclic shift index.

The network device may estimate a frequency domain channel $H_{u,v}$ based on the received frequency domain data $\tilde{y}_{u,v}$ and frequency domain data $y_u$ corresponding to the known ZC sequence $x_u$, and an estimated frequency domain channel $\tilde{H}_{u,v}$ satisfies the following formula (10):

$$\tilde{H}_{u,v}\left(k\right) = y_u * \tilde{y}_{u,v}\left(k\right) = \left(y_u\right) * \left[H_{u,v}\left(k\right) y_{u,v}\left(k\right)\right] = H_{u,v}\left(k\right)\left[\left(y_u\right) * y_{u,v}\left(k\right)\right] = H_{u,v}\left(k\right) e^{j2\pi\frac{C_v}{L_{RA}}k}$$

formula (10),

where
for meanings of $H_{u,v}$, $y_{u,v}$, $u$, and $v$, reference is made to the foregoing formula (9); and for meanings of $C_v$ and $L_{RA}$, reference is made to the foregoing formula (2). Details are not described herein again.

The estimated time-domain channel $\tilde{h}_{u,v}$ may be obtained by performing inverse Fourier transform on the estimated frequency domain channel. It can be learned from the foregoing formula (10) that the estimated frequency domain channel $\tilde{H}_{u,v}$ is obtained by multiplying an actual frequency domain channel $H_{u,v}$ by a phase factor $e^{j2\pi\frac{C_v}{L_{RA}}k}$ . It may be understood that the phase factor $e^{j2\pi\frac{C_v}{L_{RA}}k}$ enables the estimated time-domain channel to be obtained by performing cyclic shift processing on an actual time-domain channel. Therefore, when two terminal devices use a same root of the ZC sequence and different cyclic shift values or cyclic indexes, time-domain channels of the two terminal devices are shifted to different regions. Therefore, the network device may divide obtained data of a time-domain channel into a plurality of regions, a quantity of the plurality of regions is the same as a quantity of cyclic shifts, and the plurality of regions are in one-to-one correspondence with a plurality of cyclic shift values or cyclic shift indexes. In this way, the network station device can detect energy or energy of a maximum value of a time-domain channel in any one of the plurality of regions. When detecting that energy of a time-domain channel in a specific region exceeds a specified threshold, the network device determines that a terminal device sends a preamble by using a cyclic shift value corresponding to the region. Therefore, the network device can detect preambles sent by different terminal devices and distinguish the preambles, and feed back, to the terminal device, a TA value estimated based on a detected preamble.

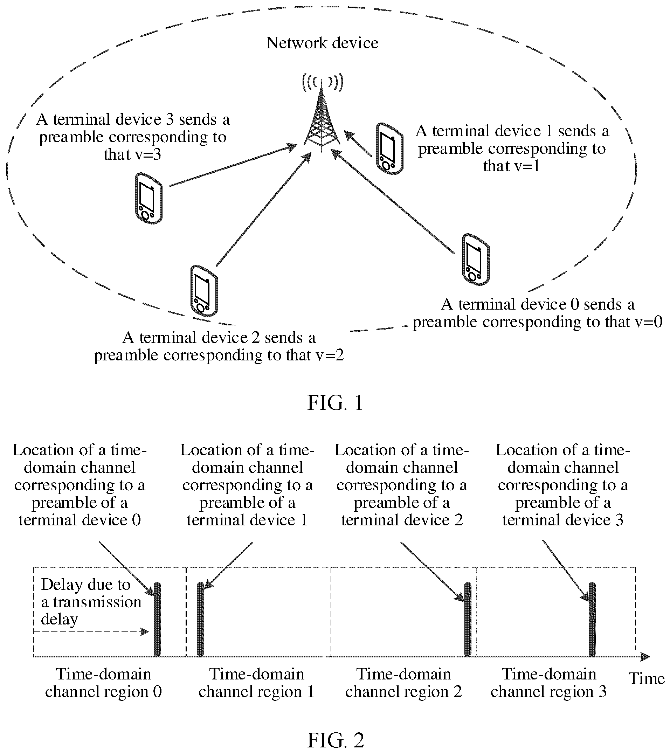

For example, FIG. 1 is a diagram of sending preambles by different terminal devices to a network device. It is assumed that a quantity of available cyclic shifts determined based on a cell radius is 4, and preambles sent by a terminal device 0 to a terminal device 3 are all generated by performing cyclic shift processing on a same ZC sequence based on different cyclic shift values. That is, a same root of the ZC sequence is used, but cyclic shift values or cyclic shift indexes $v$ are different. The terminal device 0 sends, to the network device, a preamble corresponding to that $v = 0$ ; the terminal device 1 sends, to the network device, a preamble corresponding to that $v = 1$ ; a terminal device 2 sends, to the network device, a preamble corresponding to that $v = 2$ ; and the terminal device 3 sends, to the network device, a preamble corresponding to that $v = 3$ .

With reference to FIG. 1, FIG. 2 is a diagram of detecting the preambles by the network device. The network device divides an estimated time-domain channel into four regions, and a region 0 to a region 3 respectively correspond to a cyclic shift index of 0 to a cyclic shift index of 3. It can be learned that a time-domain channel corresponding to the preamble sent by the terminal device 0 is in the region 0; a time-domain channel corresponding to the preamble sent by the terminal device 1 is in a region 1; a time-domain channel corresponding to the preamble sent by the terminal device 2 is in a region 2; and a time-domain channel corresponding to the preamble sent by the terminal device 3 is in the region 3. Alternatively, the time-domain channel corresponding to the preamble may have a maximum value of the time-domain channel. In addition, because the terminal devices are at different geographical locations in a cell, transmission delays of sending the preambles by the terminal devices to the network device are different. As shown in FIG. 2, specific locations of time-domain channels that correspond to different preambles and that are in regions may be determined based on transmission delays. For example, the terminal device 0 is far from the network device, and a transmission delay is large. Therefore, the time-domain channel corresponding to the preamble sent by the terminal device 0 is at an end location of the region 0. The terminal device 1 is close to a base station, and a transmission delay is small. Therefore, the time-domain channel corresponding to the preamble sent by the terminal device 1 is at a front location of the region 1. Correspondingly, the network device may calculate a TA value based on a location of a time-domain channel in a region. Because a quantity of cyclic shifts is determined based on the cell radius or a maximum transmission delay, the time-domain channel corresponding to the preamble sent by the terminal 0 is only in the region 0, and is not in another region. Therefore, preambles corresponding to different cyclic shift values do not collide.

It may be understood that, because the specific locations of the time-domain channels that correspond to the different preambles and that are in the regions are determined by the transmission delays, a longer distance between a terminal device and the network device indicates that a location of a time-domain channel that corresponds to a preamble sent by the terminal device and that is in a region is closer to an end of the region. When a terminal device is farthest from the network device (in other words, a distance between the terminal device and the network device is the cell radius), a designed size of a time-domain channel region needs to ensure that a time-domain channel of a preamble sent by the terminal device is still in a corresponding region, and is not in another region, to avoid a collision.

In addition, a quantity of time-domain channel regions is the same as the quantity of cyclic shifts, to be specific, the quantity of time-domain channel regions is related to a step of cyclic shifts, and a size of each time-domain channel region (that is, a quantity of elements included in each region) is related to the step of cyclic shifts. Therefore, the step of cyclic shifts is limited by the cell radius, and the quantity of cyclic shifts is limited by the cell radius. When the terminal device is farthest from the network device, a transmission delay is the largest, and a TA value corresponding to the terminal device is also the largest. Therefore, it may also be considered that the step of cyclic shifts is limited by a maximum TA value, and the quantity of cyclic shifts is limited by the maximum TA value.

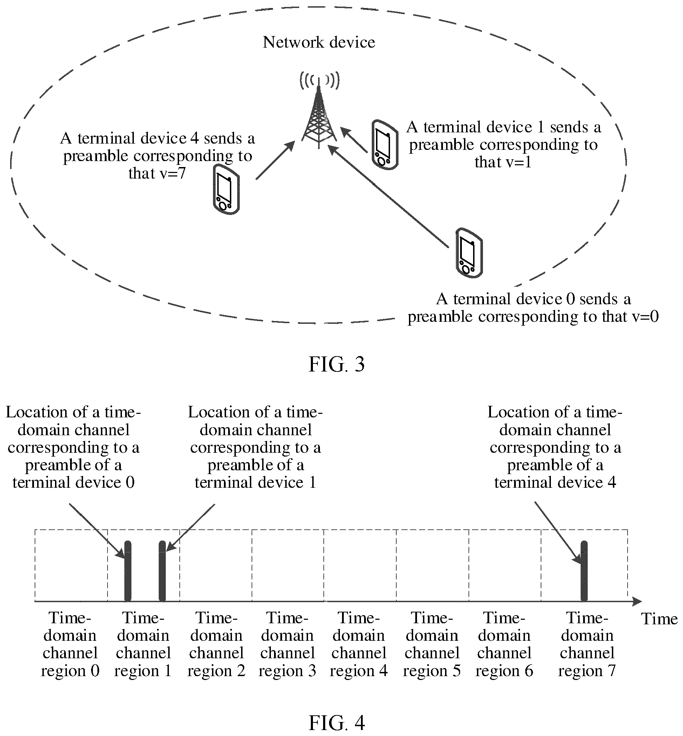

With reference to FIG. 1, FIG. 3 is a diagram of sending preambles by terminal devices to the network device in a case in which the cell radius remains unchanged and the quantity of cyclic shifts is doubled. In this case, the quantity of available cyclic shifts is 8. The terminal device 0 sends, to the network device, the preamble corresponding to that $v = 0$ ; the terminal device 1 sends, to the network device, the preamble corresponding to that $v = 1$; and a terminal device 4 sends, to the network device, a preamble corresponding to that $v = 7$ .

With reference to FIG. 3, FIG. 4 is a diagram of detecting the preambles by the network device. The network device divides an estimated time-domain channel into eight regions, and a region 0 to a region 7 respectively correspond to a cyclic shift index of 0 to a cyclic shift index of 7. In this case, because the terminal device 1 is close to the network device, the time-domain channel corresponding to the sent preamble is in a region 1. Because the terminal device 4 is also close to the network device, a time-domain channel corresponding to the sent preamble is in the region 7. However, because the terminal device 0 located at a cell edge is far from the network device, and the transmission delay is close to the maximum transmission delay, the time-domain channel corresponding to the preamble sent by the terminal device 0 is not in the region 0, and is in the region 1. In this case, if the network device detects, in the region 1, that energy of a time-domain channel exceeds a threshold, the network device cannot determine whether a preamble is sent by the terminal device 0 or the terminal device 1, in other words, the preamble corresponding to the cyclic shift index of 0 collides with the preamble corresponding to the cyclic shift index of 1. Preamble collision greatly affects detection performance of the network device.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or effects. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In embodiments of this application, a "quantity of cyclic shifts" may be understood as a "quantity of cyclic shift values", and a "$p^{th}$ cyclic shift" may be understood as a "$p^{th}$ cyclic shift value". This is uniformly described herein, and details are not described below again.

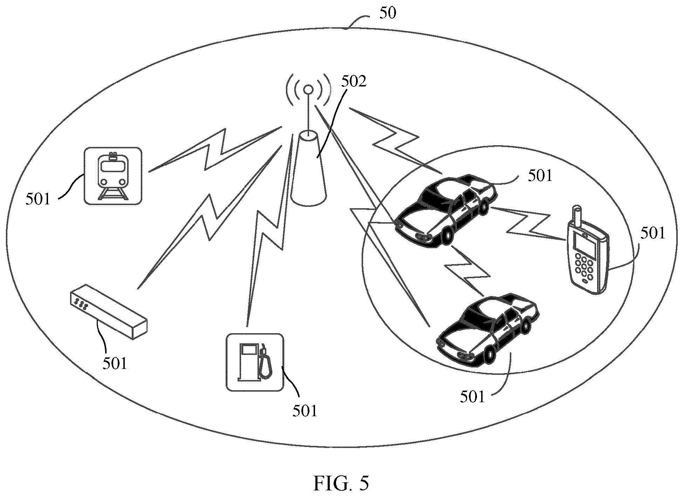

FIG. 5 shows a communication system 50 according to an embodiment of this application. The communication system 50 includes a network device 502 and one or more terminal devices 501 connected to the network device 502. The terminal device 501 is connected to the network device 502 in a wireless manner. Optionally, different terminal devices 501 may communicate with each other. The terminal device 501 may be at a fixed location, or may be movable.

It should be noted that FIG. 5 is merely a diagram. Although not shown, another network device may further be included in the communication system 50. For example, the communication system 50 may further include one or more of the following: a core network device, a wireless relay device, and a wireless backhaul device. This is not specifically limited herein. The network device may be connected to the core network device in a wireless or wired manner. The core network device and the network device 502 may be different independent physical devices, or functions of the core network device and logical functions of the network device 502 may be integrated into a same physical device, or a part of functions of the core network device and a part of functions of the network device 502 may be integrated into one physical device. This is not specifically limited in this embodiment of this application.

An example in which the network device 502 shown in FIG. 5 communicates with any terminal device 501 is used. In this embodiment of this application, in a possible implementation, the terminal device 501 is configured to obtain first information. The first information includes at least one of the following: historical timing advance TA information, geographical location information, or power information of the terminal device 501. The terminal device 501 is further configured to determine one group of preambles from $K_G$ groups of preambles based on the first information. $K_G$ is an integer greater than 1, a total quantity of preambles in the $K_G$ groups of preambles is positively correlated with a quantity of preamble cyclic shifts, and the quantity of preamble cyclic shifts is positively correlated with the quantity $K_G$ of groups of preambles. The terminal device 501 is further configured to send a first preamble in the one group of preambles to the network device 502. The network device 502 is configured to receive the first preamble from the terminal device 501, and determine a first time-domain channel based on the first preamble. The first time-domain channel includes $N_{CS}$ regions. The network device 502 is further configured to determine, based on a correspondence between the $N_{CS}$ regions of the first time-domain channel and cyclic shift indexes of the $K_G$ groups of preambles, a cyclic shift index and a group sequence number that are of the first preamble. A $p^{th}$ cyclic shift index of an $i^{th}$ group of preambles in the $K_G$ groups of preambles corresponds to a $((p+i) \bmod N_{CS})^{th}$ region of the first time-domain channel, mod represents a modulo operation, and $N_{CS}$

represents the quantity of cyclic shifts. Specific implementation and technical effects of the solution are described in detail in subsequent method embodiments, and details are not described herein again.

An example in which the network device 502 shown in FIG. 5 communicates with any terminal device 501 is used. In this embodiment of this application, in another possible implementation, the terminal device 501 is configured to obtain first information. The first information includes at least one of the following: historical timing advance TA information, geographical location information, or power information of the terminal device 501. The terminal device 501 is further configured to determine a first TA value based on the first information, and determine, based on the first TA value, first time at which a first preamble is sent to the network device 502. The first preamble is one of $N_{all}^{root}$ preambles, and $N_{all}^{root}$ is a positive integer greater than 1. The terminal device 501 is further configured to send the first preamble to the network device 502 at the first time. The network device 502 is configured to receive the first preamble, and determine a first time-domain channel based on the first preamble. The first time-domain channel includes $N_{CS}$ regions. The network device 502 is further configured to determine a cyclic shift index of the first preamble based on a correspondence between the $N_{CS}$ regions of the first time-domain channel and cyclic shift indexes of preambles. A p$^{th}$ cyclic shift corresponds to a p$^{th}$ region of the first time-domain channel. The network device 502 is further configured to determine a second TA value based on the cyclic shift index and a root index that are of the first preamble. The network device 502 is further configured to send the second TA value to the terminal device 501. Specific implementation and technical effects of the solution are described in detail in subsequent method embodiments, and details are not described herein again.

Optionally, the network device 502 in this embodiment of this application is a device for connecting a terminal device to a wireless network, and may be a BS, an evolved NodeB (evolved NodeB, eNodeB), a transmission reception point (transmission reception point, TRP), a next generation NodeB (next generation NodeB, gNB) in a fifth generation (the fifth generation, 5G) mobile communication system, a base station in a future mobile communication system, an access node in a wireless fidelity (wireless fidelity, Wi-Fi) system, or the like; or may be a module or unit that completes a part of functions of a base station, for example, may be a central unit (central unit, CU), or may be a distributed unit (distributed unit, DU). A specific technology and a specific device form that are used by the network device are not limited in this embodiment of this application. In this application, unless otherwise specified, the network device is a radio access network device.

Optionally, the terminal device in this embodiment of this application may be a device, for example, a terminal or a chip that may be used in the terminal, configured to implement a wireless communication function. The terminal may be UE, an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a virtual reality (virtual reality, VR) terminal apparatus, an augmented reality (augmented reality, AR) terminal apparatus, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in smart home (smart home), or the like.

Optionally, in this embodiment of this application, the terminal device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that communication can be performed according to the method provided in embodiments of this application by running a program that records code of the method provided in embodiments of this application. For example, the execution body of the method provided in embodiments of this application may be a terminal device, or may be a functional module that can invoke a program and execute the program in a terminal device.

With reference to FIG. 1 and FIG. 3, the network device 502 shown in FIG. 5 may be the network device in FIG. 1 or FIG. 3, and the terminal device 501 shown in FIG. 5 may be at least one of the terminal device 0 in FIG. 1 or FIG. 3, the terminal device 1 in FIG. 1 or FIG. 3, the terminal device 2 in FIG. 1, the terminal device 3 in FIG. 1, or the terminal device 4 in FIG. 3.

In other words, related functions of the terminal device in this embodiment of this application may be implemented by one device, or may be implemented by a plurality of devices together, or may be implemented by one or more functional modules in one device. This is not specifically limited in this embodiment of this application. It may be understood that the foregoing function may be a network element in a hardware device, a software function running on dedicated hardware, a combination of hardware and software, or a virtualized function instantiated on a platform (for example, a cloud platform).

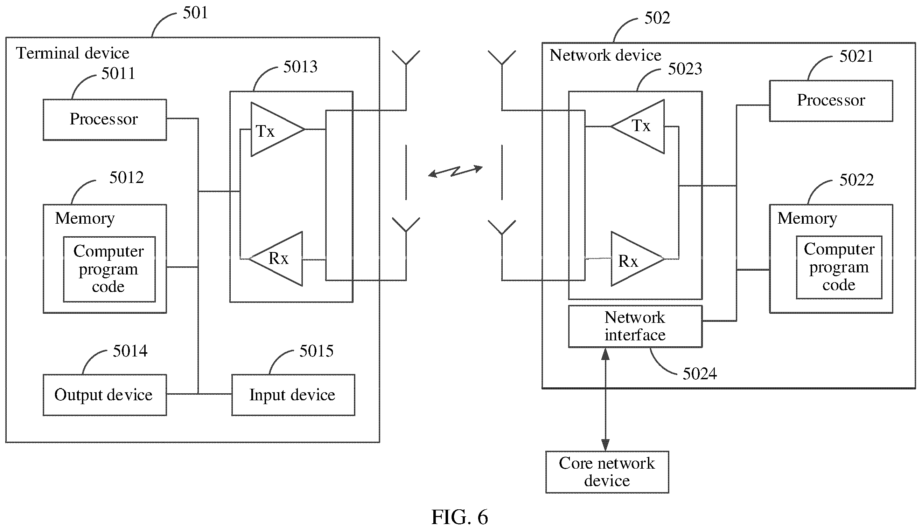

Optionally, FIG. 6 is a diagram of structures of a network device 502 and a terminal device 501 according to an embodiment of this application.

The terminal device 501 includes at least one processor 5011 and at least one transceiver 5013. Optionally, the terminal device 501 may further include at least one memory 5012, at least one output device 5014, or at least one input device 5015.

The processor 5011, the memory 5012, and the transceiver 5013 are connected through a communication line. The communication line may include a path for transmitting information between the foregoing components.

The processor 5011 may be a general-purpose central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like. During specific implementation, in an embodiment, the processor 5011 may also include a plurality of CPUs, and the processor 5011 may be a single-core processor or a multi-core processor. The processor herein may be one or more devices, circuits, or processing cores configured to process data.

The memory 5012 may be an apparatus having a storage function. For example, the memory may be a read-only memory (read-only memory, ROM) or another type of static storage device that can store static information and instructions, a random access memory (random access memory, RAM) or another type of dynamic storage device that can store information and instructions, or may be a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM) or other optical disk storage, optical disc storage (including a compact disc, a laser disc, an optical disc, a digital versatile disc, a Blu-ray disc, and the like), a magnetic disk storage medium or another magnetic storage device, or any other medium that can be configured to carry or store desired program code in a form of an instruction or a data structure and that is accessible by a computer, but is not limited thereto. The memory 5012 may exist independently, and is connected to the processor 5011 through the communication line. Alternatively, the memory 5012 may be integrated with the processor 5011.

The memory 5012 is configured to store computer-executable instructions for executing the solutions of this application, and the processor 5011 controls execution. Specifically, the processor 5011 is configured to execute the computer-executable instructions stored in the memory 5012, to implement the preamble transmission method in embodiments of this application.

Alternatively, optionally, in this embodiment of this application, the processor 5011 may perform processing-related functions in the preamble transmission method provided in the following embodiments of this application, and the transceiver 5013 is responsible for communicating with another device or a communication network. This is not specifically limited in this embodiment of this application.

Optionally, the computer-executable instructions in this embodiment of this application may also be referred to as application program code or computer program code. This is not specifically limited in this embodiment of this application.

The transceiver 5013 may use any apparatus such as a transceiver, and is configured to communicate with another device or a communication network, for example, an Ethernet, a radio access network (radio access network, RAN), or a wireless local area network (wireless local area network, WLAN). The transceiver 5013 includes a transmitter (transmitter, Tx) and a receiver (receiver, Rx).

The output device 5014 communicates with the processor 5011, and may display information in a plurality of manners. For example, the output device 5014 may be a liquid crystal display (liquid crystal display, LCD), a light-emitting diode (light-emitting diode, LED) display device, a cathode ray tube (cathode ray tube, CRT) display device, a projector (projector), or the like.

The input device 5015 communicates with the processor 5011, and may receive user input in a plurality of manners. For example, the input device 5015 may be a mouse, a keyboard, a touchscreen device, a sensing device, or the like.

The network device 502 includes at least one processor 5021, at least one transceiver 5023, and at least one network interface 5024. Optionally, the network device 502 may further include at least one memory 5022. The processor 5021, the memory 5022, the transceiver 5023, and the network interface 5024 are connected through a communication line. The network interface 5024 is configured to connect to a core network device through a link (for example, an S1 interface), or connect to a network interface (not shown in FIG. 6) of another network device through a wired or wireless link (for example, an X2 interface). This is not specifically limited in this embodiment of this application. In addition, for related descriptions of the processor 5021, the memory 5022, and the transceiver 5023, refer to the descriptions of the processor 5011, the memory 5012, and the transceiver 5013 in the terminal device 501. Details are not described herein again.

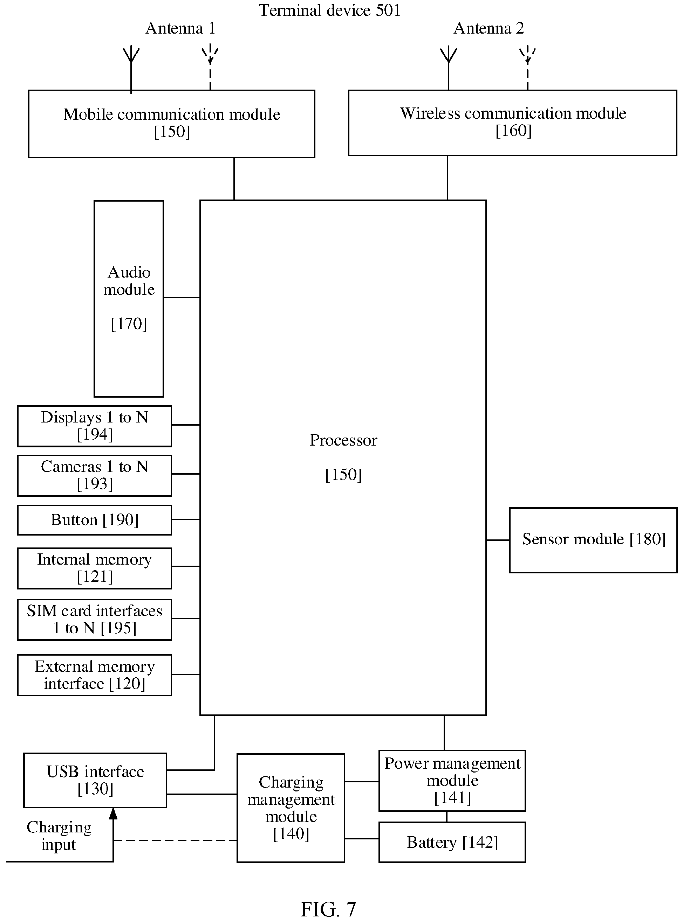

With reference to the diagram of the structure of the terminal device 501 shown in FIG. 6, for example, FIG. 7 is a specific structural form of the terminal device 501 according to an embodiment of this application.

In some embodiments, a function of the processor 5011 in FIG. 6 may be implemented by a processor 110 in FIG. 7.

In some embodiments, a function of the transceiver 5013 in FIG. 6 may be implemented by an antenna 1, an antenna 2, a mobile communication module 150, a wireless communication module 160, and the like in FIG. 7. The mobile communication module 150 may provide a solution that is applied to the terminal device 501 and that includes a wireless communication technology such as LTE, NR, or future mobile communication. The wireless communication module 160 may provide a solution that is applied to the terminal device 501 and that includes a wireless communication technology such as WLAN (for example, a Wi-Fi network), Bluetooth (Bluetooth, BT), a global navigation satellite system (global navigation satellite system, GNSS), frequency modulation (frequency modulation, FM), near field communication (near field communication, NFC), infrared, or the like. In some embodiments, in the terminal device 501, the antenna 1 and the mobile communication module 150 are coupled, and the antenna 2 and the wireless communication module 160 are coupled, so that the terminal device 501 can communicate with a network and another device by using a wireless communication technology.

In some embodiments, a function of the memory 5012 in FIG. 6 may be implemented by an internal memory 121 in FIG. 7, an external memory connected to an external memory interface 120 in FIG. 7, or the like.

In some embodiments, a function of the output device 5014 in FIG. 6 may be implemented by displays 194 in FIG. 7.

In some embodiments, a function of the input device 5015 in FIG. 6 may be implemented by a mouse, a keyboard, a touchscreen device, or a sensor module 180 in FIG. 7.

In some embodiments, as shown in FIG. 7, the terminal device 501 may further include one or more of the following: an audio module 170, cameras 193, a button 1502, SIM card interfaces 195, a USB interface 130, a charging management module 140, a power management module 141, and a battery 142.

It may be understood that the structure shown in FIG. 7 does not constitute a specific limitation on the terminal device 501. For example, in some other embodiments of this application, the terminal device 501 may include more or fewer components than those shown in the figure, or some components may be combined, or some components may be split, or different component arrangement may be used. The components shown in the figure may be implemented by hardware, software, or a combination of software and hardware.

The following specifically describes, with reference to FIG. 1 to FIG. 7, preamble transmission methods provided in embodiments of this application.

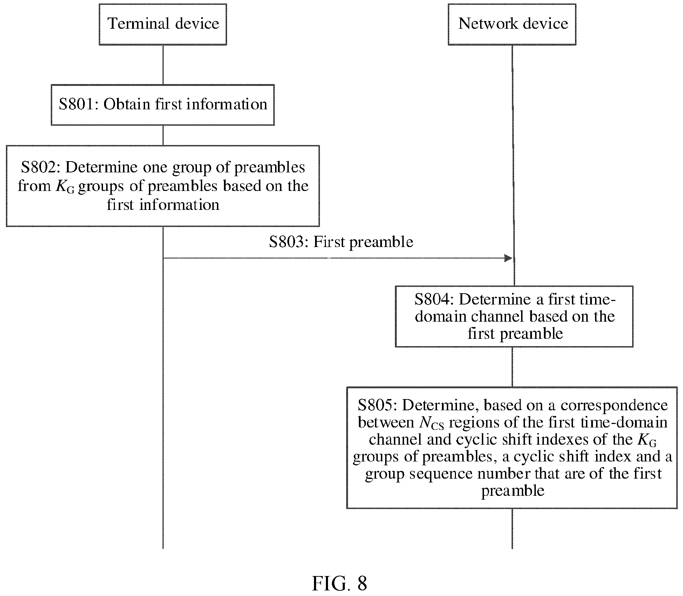

FIG. 8 shows a preamble transmission method according to an embodiment of this application. The preamble transmission method includes the following steps.

S801: A terminal device obtains first information. The first information includes at least one of the following: historical timing advance TA information, geographical location information, or power information of the terminal device.

For example, the historical TA information may be a historical TA value. When there is a previous random access procedure, the historical TA value may be determined based on the previous random access procedure. For example, the historical TA value may be a TA value determined in the previous random access procedure. When there is no previous random access procedure, the historical TA value may be preset.

For example, the geographical location information of the terminal device may be location information of the terminal device relative to a network device in a cell, for example, a distance between the terminal device and the network device, and more specifically, a straight-line distance between the terminal device and the network device. Alternatively, a geographical location of the terminal device may be geographical coordinate information of the terminal device, for example, longitude and latitude information. For example, the geographical location information of the terminal device may be carried by the terminal device. For example, the terminal device is fixed and does not move, and the geographical location information of the terminal device may be determined after the terminal device is placed. Alternatively, the geographical location information of the terminal device may be obtained by the terminal device through measurement based on data sent by the network device. The geographical location information of the terminal device may alternatively be obtained by the terminal device by sensing a surrounding environment. This is not limited in this embodiment of this application.

For example, the power information may be determined by the terminal device based on power of the data received from the network device, for example, power of broadcast data of the network device. Alternatively, the power information may be determined by the network device based on power of data received from the terminal device. For example, the network device may determine the power information based on data sent by the terminal device in a historical transmission process, and then notify the terminal device of the power information by using signaling.

S802: The terminal device determines one group of preambles from $K_G$ groups of preambles based on the first information. $K_G$ is an integer greater than 1, a total quantity of preambles in the $K_G$ groups of preambles is positively correlated with a quantity of preamble cyclic shifts, and the quantity of preamble cyclic shifts is positively correlated with the quantity $K_G$ of groups of preambles.

For example, the quantity $K_G$ of groups of preambles may be preset, or may be notified by the network device to the terminal device by using signaling. This is not limited in this embodiment of this application.

According to the present invention, that the terminal device determines one group of preambles from $K_G$ groups of preambles based on the first information includes: The terminal device determines a first parameter based on the first information, and determines the one group of preambles from the $K_G$ groups of preambles based on a correspondence between the first parameter and the $K_G$ groups of preambles. In this solution, the first parameter is introduced, so that the terminal device can select one group of preambles from a plurality of groups of preambles as a candidate to-be-sent preamble.

Optionally, an i$^{th}$ group of preambles in the $K_G$ groups of preambles corresponds to at least one piece of TA information, and at least one TA value corresponding to the i$^{th}$ group of preambles is different from at least one TA value corresponding to a j$^{th}$ group of preambles. Both i and j are non-negative integers less than $K_G$, and values of i and j are different. In this solution, there is a correspondence between the $K_G$ groups of preambles and TA information, so that the terminal device can determine the first parameter, to be specific, one piece of TA information, based on the first information, and determine the one group of preambles corresponding to the first parameter.

Optionally, the i$^{th}$ group of preambles in the $K_G$ groups of preambles corresponds to a first TA value range, and the first TA value range corresponding to the i$^{th}$ group of preambles does not overlap a second TA value range corresponding to the j$^{th}$ group of preambles. Both i and j are the non-negative integers less than $K_G$, and the values of i and j are different.

Optionally, a range of the first TA value range is related to the quantity $K_G$ of groups of preambles and a maximum TA value. In this solution, when the first TA value range is designed, the quantity $K_G$ of groups of preambles and the maximum TA value are considered, so that $K_G$ TA value ranges corresponding to the $K_G$ groups of preambles can be designed in a range from 0 to the maximum TA value.

In a possible implementation, the $K_G$ TA value ranges corresponding to the $K_G$ groups of preambles may be $K_G$ ranges into which the range $[0, T_{A,\max}]$ is evenly divided. $T_{A,\max}$ represents the maximum TA value, and the maximum TA value may be notified by the network device to the terminal device by using signaling, for example, notified by the network device to the terminal device through a broadcast channel. To be specific, when a group sequence number i of a current preamble is 0, 1, ..., or $K_G$ - 2, a corresponding TA value range is $\left[ \dfrac{iT_{A,\max}}{K_G}, \dfrac{(i+1)T_{A,\max}}{K_G} \right)$, and when the group sequence number i of the current preamble is $K_G$ -1, the corresponding TA value range is $\left[ \dfrac{(K_G-1)T_{A,\max}}{K_G}, T_{A,\max} \right]$.

For example, when $K_G = 3$, correspondences between group sequence numbers of preambles and three TA value ranges may be shown in Table 2.

**Table 2**

| Group sequence number of a preamble | TA value range |
|---|---|
| 0 | $\left[ 0, \dfrac{T_{A,\max}}{3} \right)$ |
| 1 | $\left[ \dfrac{T_{A,\max}}{3}, \dfrac{2T_{A,\max}}{3} \right)$ |
| 2 | $\left[ \dfrac{2T_{A,\max}}{3}, T_{A,\max} \right]$ |

In another possible implementation, when a group sequence number i of a current preamble is 0, 1, ..., or $K_G$ -1, a length of a corresponding TA value range is $\dfrac{2(K_G-i)}{K_G(K_G+1)}T_{A,\max}$ , so that a range $[0, T_{A,\max}]$ is divided into TA ranges of different lengths. For example, when $K_G = 3$, correspondences between group sequence numbers of preambles and three TA value ranges may be shown in Table 3.

**Table 3**

| Group sequence number of a preamble | TA value range |
|---|---|
| 0 | $\left[ 0, \dfrac{T_{A,\max}}{2} \right)$ |
| 1 | $\left[ \dfrac{T_{A,\max}}{2}, \dfrac{5T_{A,\max}}{6} \right)$ |
| 2 | $\left[ \dfrac{5T_{A,\max}}{6}, T_{A,\max} \right]$ |

Because TA values corresponding to all terminal devices may not be evenly distributed, in this case, sizes of different TA value ranges may be flexibly designed. Therefore, quantities of terminal devices corresponding to the different TA value ranges are basically the same, and a probability of preamble collision caused by an excessively large quantity of terminal devices corresponding to a specific TA value range is avoided.

In still another possible implementation, when a group sequence number i of a current preamble is 0, a corresponding TA value range is $\left[ 0, \dfrac{2T_{A,\max}}{K_G + 1} \right)$ ; when the group sequence number i of the current preamble is 1, 2, ..., or $K_G$ - 2, the corresponding TA value range is $\left[ \dfrac{(1+i)T_{A,\max}}{K_G + 1}, \dfrac{(2+i)T_{A,\max}}{K_G + 1} \right)$ ; and when the group sequence number i of the current preamble is $K_G$ -1, the corresponding TA value range is $\left[ \dfrac{(1+i)T_{A,\max}}{K_G + 1}, T_{A,\max} \right]$ . For example, when $K_G = 3$, correspondences between group sequence numbers of preambles and three TA value ranges may be shown in Table 4.

**Table 4**

| Group sequence number of a preamble | TA value range |
|---|---|
| 0 | $\left[ 0, \dfrac{T_{A,\max}}{2} \right)$ |
| 1 | $\left[ \dfrac{T_{A,\max}}{2}, \dfrac{3T_{A,\max}}{4} \right)$ |
| 2 | $\left[ \dfrac{3T_{A,\max}}{4}, T_{A,\max} \right]$ |

Optionally, the first information is the historical TA information of the terminal device, and the first parameter is the historical TA information of the terminal device. In this solution, when the first information is the historical TA information of the terminal device, the first parameter is equivalent to the first information, and no conversion is required.

For example, the terminal device may further determine, by determining a TA value range within which a historical TA value falls, one group of preambles corresponding to the TA value range within which the historical TA value falls.

Optionally, the first information is the geographical location information of the terminal device, and the geographical location information of the terminal device is a distance between the terminal device and the network device. That the terminal device determines a first parameter based on the first information includes: The terminal device determines the first parameter based on the distance between the terminal device and the network device, a cell radius of a cell in which the terminal device is located, and a maximum TA value. The first parameter is TA information, and the first parameter is the same as one of at least one piece of TA information corresponding to the one group of preambles determined from the $K_G$ groups of preambles. In this solution, when the first information is the geographical location information of the terminal device, the first parameter is not equivalent to the first information, and the first information needs to be converted by using the cell radius of the cell in which the terminal device is located and the maximum TA value, to obtain the first parameter.

In this embodiment of this application, a formula used by the terminal device to determine the first parameter based on the distance between the terminal device and the network device, the cell radius of the cell in which the terminal device is located, and the maximum TA value may be preset.

For example, the distance between the terminal device and the network device, the cell radius of the cell in which the terminal device is located, and the maximum TA value satisfy the following formula (11):

$$P_{1st} = \frac{r_{UE}}{r_{cell}} T_{A,max} \hspace{4cm} \text{formula (11),}$$

where

$P_{1st}$ represents the first parameter; $r_{UE}$ represents the distance between the terminal device and the network device; $r_{cell}$ represents the cell radius of the cell in which the terminal device is located; and $T_{A,max}$ represents the maximum TA value.

Optionally, the first information is the historical TA information of the terminal device and the geographical location information of the terminal device, and the geographical location information of the terminal device is a distance between the terminal device and the network device. That the terminal device determines a first parameter based on the first information includes: The terminal device determines the first parameter based on a historical TA value of the terminal device, the distance between the terminal device and the network device, a cell radius of a cell in which the terminal device is located, and a maximum TA value. The first parameter is TA information, and the first parameter is the same as one of at least one piece of TA information corresponding to the one group of preambles determined from the $K_G$ groups of preambles. In this solution, when the first information is the historical TA information of the terminal device and the geographical location information of the terminal device, the first parameter is not equivalent to the first information, and the first information needs to be converted by using the cell radius of the cell in which the terminal device is located and the maximum TA value, to obtain the first parameter.

In this embodiment of this application, a formula used by the terminal device to determine the first parameter based on the historical TA value of the terminal device, the distance between the terminal device and the network device, the cell radius of the cell in which the terminal device is located, and the maximum TA value may be preset.

For example, the historical TA value of the terminal device, the distance between the terminal device and the network device, the cell radius of the cell in which the terminal device is located, and the maximum TA value satisfy the following formula (12):

$$P_{1st} = \left( T_{A,old} + \frac{r_{UE}}{r_{cell}} T_{A,max} \right) / 2 \hspace{3cm} \text{formula (12),}$$

where

$P_{1st}$ represents the first parameter; $T_{A,old}$ represents the historical TA value of the terminal device; $r_{UE}$ represents the distance between the terminal device and the network device; $r_{cell}$ represents the cell radius of the cell in which the terminal device is located; and $T_{A,max}$ represents the maximum TA value.

Optionally, when the first information is the historical TA information of the terminal device, the geographical location information of the terminal device, and the power information, a formula used when the terminal device determines the first parameter based on the first information may be preset.

Optionally, an $i^{th}$ group of preambles in the $K_G$ groups of preambles corresponds to at least one radius value, and the at least one radius value corresponding to the $i^{th}$ group of preambles is different from at least one radius value corresponding to a $j^{th}$ group of preambles. Both i and j are non-negative integers less than $K_G$, and values of i and j are different. In this solution, there is a correspondence between the $K_G$ groups of preambles and radius values, so that the terminal device can determine the first parameter, in other words, one radius value, based on the first information, and determine the one group of preambles corresponding to the first parameter.

EP 4 462 933 B1

Optionally, the i$^{th}$ group of preambles in the $K_G$ groups of preambles corresponds to a first radius value range, and the first radius value range corresponding to the i$^{th}$ group of preambles does not overlap a second radius value range corresponding to the j$^{th}$ group of preambles. Both i and j are the non-negative integers less than $K_G$, and the values of i and j are different.

Optionally, a range of the first radius value range is related to the quantity $K_G$ of groups of preambles and a cell radius of a cell in which the terminal device is located. In this solution, when the first radius value range is designed, the quantity $K_G$ of groups of preambles and the cell radius are considered, so that $K_G$ radius value ranges corresponding to the $K_G$ groups of preambles can be designed in a range from 0 to the cell radius.

In a possible implementation, the $K_G$ radius value ranges corresponding to the $K_G$ groups of preambles may be $K_G$ ranges into which the range [0,$r_{cell}$] is evenly divided. $r_{cell}$ represents the cell radius of the cell in which the terminal device is located. The cell radius of the cell in which the terminal device is located may be notified by the network device to the terminal device by using signaling, for example, notified by the network device to the terminal device through a broadcast channel. To be specific, when a group sequence number i of a current preamble is 0, 1, ..., or $K_G$ - 2, a corresponding radius value range is $\left[ \dfrac{ir_{cell}}{K_G}, \dfrac{(i+1)r_{cell}}{K_G} \right)$ , and when the group sequence number i of the current preamble is $K_G$ -1, the corresponding radius value range is $\left[ \dfrac{(K_G-1)r_{cell}}{K_G}, r_{cell} \right]$ .

For example, when $K_G$ = 3, correspondences between group sequence numbers of preambles and three radius value ranges may be shown in Table 5.

**Table 5**

| Group sequence number of a preamble | Radius value range |
|---|---|
| 0 | $\left[ 0, \dfrac{r_{cell}}{3} \right)$ |
| 1 | $\left[ \dfrac{r_{cell}}{3}, \dfrac{2r_{cell}}{3} \right)$ |
| 2 | $\left[ \dfrac{2r_{cell}}{3}, r_{cell} \right]$ |

In another possible implementation, when a group sequence number i of a current preamble is 0, 1, ..., or $K_G$ -1, a length of a corresponding radius value range is $\dfrac{2(K_G-i)}{K_G(K_G+1)} r_{cell}$ , so that a range [0,$r_{cell}$] is divided into radius value ranges of different lengths. For example, when $K_G$ = 3, correspondences between group sequence numbers of preambles and three radius value ranges may be shown in Table 6.

Table 6

| Group sequence number of a preamble | Radius value range |
|---|---|
| 0 | $\left[ 0, \dfrac{r_{cell}}{2} \right)$ |
| 1 | $\left[ \dfrac{r_{cell}}{2}, \dfrac{5r_{cell}}{6} \right)$ |

24

(continued)

| Group sequence number of a preamble | Radius value range |
|---|---|
| 2 | $\left[ \dfrac{5r_{cell}}{6}, r_{cell} \right]$ |

In still another possible implementation, when a group sequence number i of a current preamble is 0, a corresponding radius value range is $\left[ 0, \dfrac{2r_{cell}}{K_G + 1} \right)$ ; when the group sequence number i of the current preamble is 1, 2, ..., or $K_G$ - 2, the corresponding radius value range is $\left[ \dfrac{(1+i)r_{cell}}{K_G + 1}, \dfrac{(2+i)r_{cell}}{K_G + 1} \right)$ ; and when the group sequence number i of the current preamble is $K_G$ -1, the corresponding radius value range is $\left[ \dfrac{(1+i)r_{cell}}{K_G + 1}, r_{cell} \right]$ . For example, when correspondences between group sequence numbers of preambles and three radius value ranges may be shown in Table 7.

**Table 7**

| Group sequence number of a preamble | Radius value range |
|---|---|
| 0 | $\left[ 0, \dfrac{r_{cell}}{2} \right)$ |
| 1 | $\left[ \dfrac{r_{cell}}{2}, \dfrac{3r_{cell}}{4} \right)$ |
| 2 | $\left[ \dfrac{3r_{cell}}{4}, r_{cell} \right]$ |

Because radius values corresponding to all terminal devices may not be evenly distributed, in this case, sizes of different radius value ranges may be flexibly designed. Therefore, quantities of terminal devices corresponding to the different radius value ranges are basically the same, and a probability of preamble collision caused by an excessively large quantity of terminal devices corresponding to a specific radius value range is avoided.

Optionally, the first information is the geographical location information of the terminal device. Specifically, the first information is a distance between the terminal device and the network device. In this case, the first parameter is the distance between the terminal device and the network device. In this solution, when the first information is the distance between the terminal device and the network device, the first parameter is equivalent to the first information, and no conversion is required.

For example, the terminal device may further determine, by determining a radius value range within which the distance between the terminal device and the network device falls, one group of preambles corresponding to the radius value range within which the distance falls.

For example, the first information is the historical TA information of the terminal device. That the terminal device determines a first parameter based on the first information includes: The terminal device determines the first parameter based on a historical TA value of the terminal device, a cell radius of a cell in which the terminal device is located, and a maximum TA value. The first parameter is a radius value, and the first parameter is the same as one of at least one radius value corresponding to the one group of preambles determined from the $K_G$ groups of preambles. In this solution, when the first information is the historical TA information of the terminal device, the first parameter is not equivalent to the first information, and the first information needs to be converted by using the cell radius of the cell in which the terminal device is located and the maximum TA value, to obtain the first parameter.

In this embodiment of this application, a formula used by the terminal device to determine the first parameter based on the historical TA value of the terminal device, the cell radius of the cell in which the terminal device is located, and the maximum TA value may be preset.

For example, the distance between the terminal device and the network device, the cell radius of the cell in which the terminal device is located, and the maximum TA value satisfy the following formula (13):

$$P_{1st} = \frac{T_{A,old}}{T_{A,\max}} r_{cell} \qquad \text{formula (13)},$$

where

$P_{1st}$ represents the first parameter; $T_{A,old}$ represents the historical TA value of the terminal device; $T_{A,\max}$ represents the maximum TA value; and $r_{cell}$ represents the cell radius of the cell in which the terminal device is located.

Optionally, the first information is the historical TA information of the terminal device and the geographical location information of the terminal device, and the geographical location information of the terminal device is a distance between the terminal device and the network device. That the terminal device determines a first parameter based on the first information includes: The terminal device determines the first parameter based on a historical TA value of the terminal device, the distance between the terminal device and the network device, a cell radius of a cell in which the terminal device is located, and a maximum TA value. The first parameter is a radius value, and the first parameter is the same as one of at least one radius value corresponding to the one group of preambles determined from the $K_G$ groups of preambles. In this solution, when the first information is the historical TA information of the terminal device and the geographical location information of the terminal device, the first parameter is not equivalent to the first information, and the first information needs to be converted by using the cell radius of the cell in which the terminal device is located and the maximum TA value, to obtain the first parameter.

In this embodiment of this application, a formula used by the terminal device to determine the first parameter based on the historical TA value of the terminal device, the distance between the terminal device and the network device, the cell radius of the cell in which the terminal device is located, and the maximum TA value may be preset.

For example, the historical TA value of the terminal device, the distance between the terminal device and the network device, the cell radius of the cell in which the terminal device is located, and the maximum TA value satisfy the following formula (14):

$$P_{1st} = \left( \frac{T_{A,old}}{T_{A,\max}} r_{cell} + r_{UE} \right) / 2 \qquad \text{formula (14)},$$

where

$P_{1st}$ represents the first parameter; $T_{A,old}$ represents the historical TA value of the terminal device; $T_{A,\max}$ represents the maximum TA value; $r_{cell}$ represents the cell radius of the cell in which the terminal device is located; and $r_{UE}$ represents the distance between the terminal device and the network device.

Optionally, when the first information is the historical TA information of the terminal device, the geographical location information of the terminal device, and the power information, a formula used when the terminal device determines the first parameter based on the first information may be preset.

The following describes how to determine a total quantity of preambles.

As described above, the preamble $x_{u,v}$ sent by the terminal device may be obtained by performing cyclic shift processing on the ZC sequence. It may be understood that one preamble may be uniquely determined by determining a root $u$ of the ZC sequence and a cyclic shift value $C_v$ that are used by the preamble, or determining a root index $i_{root}$ of the ZC sequence and a cyclic shift index $v$ that are used by the preamble.

In this embodiment of this application, the total quantity of preambles included in the $K_G$ groups of preambles is related to the quantity $K_G$ of groups of preambles. It is assumed that a quantity of preambles included in the ith group of preambles in the $K_G$ groups of preambles is $N_i^{root}$, that is, the ith group of preambles includes $N_i^{root}$ preambles. In this case, the total quantity $N_{all}^{root}$ of preambles included in the $K_G$ groups of preambles satisfies the following formula (15):

$$N_{all}^{root} = \sum_{i=0}^{K_G - 1} N_i^{root} \qquad \text{formula (15)}.$$

For example, quantities of preambles included in different groups of preambles may be the same. For example, each group of preambles includes $N^{root}$ preambles, that is, satisfies: $N_i^{root} = N^{root}$. $N^{root}$ is a positive integer, and a value of $N^{root}$ may be preset by the terminal device, or may be set by the network device and sent to the terminal device. This is not limited in this embodiment of this application. In this case, the total quantity $N_{all}^{root}$ of preambles included in the $K_G$ groups of preambles satisfies the following formula (16):

$$N_{all}^{root} = K_G N^{root} \qquad \text{formula (16)}.$$

For example, quantities of preambles included in different groups of preambles may alternatively be different. An example in which any group of preambles in the $K_G$ groups of preambles corresponds to one TA range is used. When a range of a TA value range corresponding to the i$^{th}$ group of preambles is larger, a quantity $N_i^{root}$ of preambles included in the i$^{th}$ group of preambles may be larger. For example, when a length of the TA value range corresponding to the i$^{th}$ group of preambles is $\dfrac{2(K_G - i)}{K_G(K_G + 1)} T_{A,\max}$, the quantity $N_i^{root}$ of preambles included in the i$^{th}$ group of preambles satisfies the following formula (17):

$$N_i^{root} = \left( K_G - g \right) N^{root} \qquad \text{formula (17)}.$$

For another example, when a TA value range corresponding to a 0$^{th}$ group of preambles is $\left[ 0, \dfrac{2T_{A,\max}}{K_G + 1} \right)$; a TA value range corresponding to a 1$^{st}$, 2$^{nd}$, ..., or ($K_G$-2)$^{th}$ group of preambles is $\left[ \dfrac{(1+i)T_{A,\max}}{K_G + 1}, \dfrac{(2+i)T_{A,\max}}{K_G + 1} \right)$; and a TA value range corresponding to a ($K_G$-1)$^{th}$ group of preambles is $\left[ \dfrac{(1+i)T_{A,\max}}{K_G + 1}, T_{A,\max} \right]$, the quantity $N_i^{root}$ of preambles included in the i$^{th}$ group of preambles satisfies the following formula (18):

$$N_i^{root} = \begin{cases} 2N^{root}, & i = 0 \\ N^{root}, & i \neq 0 \end{cases} \qquad \text{Formula (18)}.$$

The following describes how to determine a quantity of cyclic shifts.

In a possible implementation, a step $N_{Step}^{CS}$ of cyclic shift values may be first determined, and then the quantity $N_{CS}$ of cyclic shifts is determined based on the step $N_{Step}^{CS}$ of the cyclic shift values. The step $N_{Step}^{CS}$ of the cyclic shift values may satisfy the following formula (19):

$$N_{Step}^{CS} = \left\lfloor N_{Step}^{CS,Ini} / K_G \right\rfloor \qquad \text{formula (19)},$$

where

$N_{Step}^{CS,Ini}$ represents a basic step of cyclic shifts, and is a positive integer, and a value of $N_{Step}^{CS,Ini}$ may be preset by the terminal device. For example, the value of $N_{Step}^{CS,Ini}$ is determined based on the cell radius, a maximum transmission delay between the terminal device and the network device, or the maximum TA value. Alternatively, the value of $N_{Step}^{CS,Ini}$ may be set by the network device and sent to the terminal device. This is not limited in this embodiment of this application. $\lfloor \ \rfloor$ represents rounding down; and $K_G$ represents the quantity of groups of preambles.

Optionally, in addition to the formula (19), the step $N_{Step}^{CS}$ of the cyclic shift values may further satisfy the following formula (20):

$$N_{Step}^{CS} = \left\lfloor \frac{N_{Step}^{CS,Ini}}{K_G} + 0.5 \right\rfloor \qquad \text{formula (20),}$$

where

for meanings of $N_{Step}^{CS,Ini}$, $K_G$, and $\lfloor \rfloor$, reference is made to the foregoing formula (19). Details are not described herein again.

Optionally, with reference to the foregoing formula (1) and formula (19), the quantity of preamble cyclic shifts and the quantity $K_G$ of groups of preambles satisfy the following formula (21):

$$N_{CS} = \left\lfloor L_{RA} / \left( \left\lfloor N_{Step}^{CS,Ini} / K_G \right\rfloor \right) \right\rfloor \qquad \text{formula (21),}$$

where

$N_{CS}$ represents the quantity of preamble cyclic shifts; $L_{RA}$ represents a length of the preamble; $N_{Step}^{CS,Ini}$ represents a basic step of the cyclic shift values; and $\lfloor \rfloor$ represents rounding down.

In another possible implementation, the quantity $N_{CS}$ of cyclic shifts may be first determined, and then a step $N_{Step}^{CS}$ of cyclic shift values is determined based on the quantity $N_{CS}$ of cyclic shifts.

Optionally, the quantity $N_{CS}$ of preamble cyclic shifts and the quantity $K_G$ of groups of preambles satisfy the following formula (22):

$$N_{CS} = K_G N_{CS}^{Ini} \qquad \text{formula (22),}$$

where

$N_{CS}^{Ini}$ represents a basic quantity of cyclic shifts, and $N_{CS}^{Ini}$ is a positive integer greater than 1.

It can be learned from the foregoing formulas (21) and (22) that the quantity $N_{CS}$ of preamble cyclic shifts is positively correlated with the quantity $K_G$ of groups of preambles. When the quantity $K_G$ of groups of preambles is increased, the quantity $N_{CS}$ of preamble cyclic shifts may be correspondingly increased. Because the total quantity of preambles is positively correlated with the quantity of preamble cyclic shifts, an increase in the quantity $N_{CS}$ of cyclic shifts causes an increase in the total quantity of preambles, thereby achieving a technical effect of increasing preamble capacity.

For example, the value of $N_{CS}^{Ini}$ may be preset by the terminal device. For example, the value of $N_{CS}^{Ini}$ is determined based on the cell radius, a maximum transmission delay between the terminal device and the network device, or the maximum TA value. Alternatively, the value of $N_{CS}^{Ini}$ may be set by the network device and sent to the terminal device. This is not limited in this embodiment of this application.

Optionally, with reference to the foregoing formula (8) and formula (22), the step $N_{Step}^{CS}$ of the cyclic shift values satisfies the following formula (23):

$$N_{Step}^{CS} = \left\lfloor L_{RA} / \left( K_G N_{CS}^{Ini} \right) \right\rfloor \qquad \text{formula (23),}$$

where

$L_{RA}$ represents a length of the preamble; $N_{CS}^{Ini}$ is the basic quantity of cyclic shifts; $K_G$ represents the quantity of groups of preambles; and $\lfloor \rfloor$ represents rounding down.

The following describes an arrangement manner of $K_G$ groups of preambles.

As described above, one preamble may be uniquely determined by determining the root index $i_{root}$ of the ZC sequence and the cyclic shift index $v$ that are used by the preamble. In this embodiment of this application, a combination of the root index $i_{root}$ and the cyclic shift index $v$ may be represented as $< i_{root}, v >$.

In a possible implementation, the $i^{th}$ group of preambles in the $K_G$ groups of preambles is first arranged in ascending order of cyclic shift indexes, and then arranged in ascending order of root indexes, and an $(i+1)^{th}$ group of preambles in the $K_G$ groups of preambles is arranged sequentially after the i^th group of preambles is arranged.

For example, for a 0^th group of preambles in the $K_G$ groups of preambles, a start value $i_{root,ini}$ of root indexes and a start value $v_{ini}$ of cyclic shift indexes may be first determined, and then arrangement is performed starting from the start value $i_{root,ini}$ of the root indexes and the start value $v_{ini}$ of the cyclic shift indexes. Values of $i_{root,ini}$ and $v_{ini}$ may be preset by the terminal device, or may be set by the network device and sent to the terminal device. This is not limited in this embodiment of this application. For example, $v_{ini}$ may be preset to 0.

For example, the step $N_{Step}^{CS}$ of the cyclic shift values is first determined, and then the quantity $N_{CS}$ of cyclic shifts is determined based on the step $N_{Step}^{CS}$ of the cyclic shift values. It is assumed that the basic step of the cyclic shift values is: $N_{Step}^{CS,Ini} = 32$, the quantity of groups of preambles is: $K_G = 2$, and the length of the preamble is: $L_{RA}$ = 139. It may be learned according to the foregoing formula (19) that $N_{Step}^{CS} = \lfloor N_{Step}^{CS,Ini} / K_G \rfloor = 16$, and it may be learned according to the foregoing formula (1) that $N_{CS} = \lfloor L_{RA} / N_{Step}^{CS} \rfloor = 8$. Further, it is assumed that a same quantity of preambles is included in each group of preambles in the $K_G$ groups of preambles, and is: $N^{root}$ = 12, and both the start value $i_{root,ini}$ of the root indexes and the start value $v_{ini}$ of the cyclic shift indexes are 0. In this case, combinations of the root indexes and the cyclic shift indexes (that is, values of $<i_{root}, v>$) of the 0^th group of preambles are sequentially arranged as: <0, 0>, <0, 1>, <0, 2>, <0, 3>, <0, 4>, <0, 5>, <0, 6>, <0, 7>, <1, 0>, <1, 1>, <1, 2>, and <1, 3>. Combinations of root indexes and cyclic shift indexes of the 1^st group of preambles are sequentially arranged as: <1, 4>, <1, 5>, <1, 6>, <1, 7>, <2, 0>, <2, 1>, <2, 2>, <2, 3>, <2, 4>, <2, 5>, <2, 6>, and <2, 7>. It can be learned that a combination of a root index and a cyclic shift index that correspond to a last preamble in the 0^th group of preambles is <1, 3>, and preambles of the 1^st group of preambles are arranged sequentially after preambles of the 0^th group of preambles.

In another possible implementation, in a value range $\left[ iN_{CS}^{Ini} - i, (i+1)N_{CS}^{Ini} - 1 - i \right]$ of cyclic shift indexes, the i^th group of preambles in the $K_G$ groups of preambles is first arranged in ascending order of the cyclic shift indexes, and then arranged in ascending order of root indexes.

For example, the quantity $N_{CS}$ of cyclic shifts is first determined, and then the step $N_{Step}^{CS}$ of the cyclic shift values is determined based on the quantity $N_{CS}$ of cyclic shifts. It is assumed that the basic quantity of cyclic shifts is: $N_{CS}^{Ini} = 4$, the quantity of groups of preambles is: $K_G = 2$, and the length of the preamble is: $L_{RA}$ = 139. It may be learned according to the foregoing formula (22) that $N_{CS} = K_G N_{CS}^{Ini} = 8$, and it may be learned according to the foregoing formula (8) that $N_{Step}^{CS} = \lfloor L_{RA} / N_{CS} \rfloor = 17$. Further, it is assumed that a same quantity of preambles is included in each group of preambles in the $K_G$ groups of preambles, and is: $N^{root}$ = 12, and both the start value $i_{root,ini}$ of the root indexes and the start value $v_{ini}$ of the cyclic shift indexes are 0. In this case, combinations of the root indexes and the cyclic shift indexes of the 0^th group of preambles are sequentially arranged as: <0, 0>, <0, 1>, <0, 2>, <0, 3>, <1, 0>, <1, 1>, <1, 2>, <1, 3>, <2, 0>, <2, 1>, <2, 2>, and <2, 3>. Combinations of root indexes and cyclic shift indexes of the 1^st group of preambles are sequentially arranged as: <0, 3>, <0, 4>, <0, 5>, <0, 6>, <1, 3>, <1, 4>, <1, 5>, <1, 6>, <2, 3>, <2, 4>, <2, 5>, and <2, 6>.

In still another possible implementation, the i^th group of preambles in the $K_G$ groups of preambles is first arranged in ascending order of cyclic shift indexes, where the cyclic shift indexes are incremented by an interval of $K_G$, and then is arranged in ascending order of root indexes, and the i^th group of preambles in the $K_G$ groups of preambles is the same as the j^th group of preambles. In this solution, regular arrangement helps the terminal device select a to-be-sent preamble, and also helps the network device detect the preamble.

For example, the quantity $N_{CS}$ of cyclic shifts is first determined, and then the step $N_{Step}^{CS}$ of the cyclic shift values is determined based on the quantity $N_{CS}$ of cyclic shifts. It is assumed that the basic quantity of cyclic shifts is: $N_{CS}^{Ini} = 4$, the quantity of groups of preambles is: $K_G = 2$, and the length of the preamble is: $L_{RA}$ = 139. It may be learned according to the foregoing formula (22) that $N_{CS} = K_G N_{CS}^{Ini} = 8$, and it may be learned according to the foregoing formula (8) that $N_{Step}^{CS} = \lfloor L_{RA} / N_{CS} \rfloor = 17$. Further, it is assumed that a same quantity of preambles is included in each group of preambles in the $K_G$ groups of preambles, and is: $N^{root}$ = 12, and both the start value $i_{root,ini}$ of the root indexes and the start value $v_{ini}$ of the cyclic shift indexes are 0. In this case, both combinations of the root indexes and cyclic shift indexes of the 0^th group of preambles and combinations of root indexes and cyclic shift indexes of the 1^st group of preambles are arranged as: <0, 0>, <0, 2>, <0, 4>, <0, 6>, <1, 0>, <1, 2>, <1, 4>, <1, 6>, <2, 0>, <2, 2>, <2, 4>, and <2, 6>.

S803: The terminal device sends a first preamble in the one group of preambles to the network device. Correspondingly, the network device receives the first preamble from the terminal device.

For example, the terminal device may randomly select, as the first preamble, a preamble from the one group of preambles determined in the step S802, and send the first preamble to the network device.

S804: The network device determines a first time-domain channel based on the first preamble. The first time-domain channel includes $N_{CS}$ regions.

In this embodiment of this application, for a specific implementation in which the network device determines the first time-domain channel based on the received first preamble, refer to a conventional technology. For example, the first frequency-domain channel is first determined by using the foregoing formula (10), and then inverse Fourier transform is performed on a first frequency-domain channel, to obtain the first time-domain channel.

In this embodiment of this application, the network device may evenly divide the determined first time-domain channel $\bar{h}_{u,v}$ into $N_{CS}$ regions starting from a $0^{th}$ element to a last element, and sequentially number the regions as a region 0 to a region $N_{CS}$ -1. Each region includes one or more elements. Different cyclic shift indexes correspond to different regions.

S805: The network device determines, based on a correspondence between the $N_{CS}$ regions of the first time-domain channel and cyclic shift indexes of the $K_G$ groups of preambles, a cyclic shift index and a group sequence number that are of the first preamble. A $p^{th}$ cyclic shift of an $i^{th}$ group of preambles in the $K_G$ groups of preambles corresponds to a $((p + i) \bmod N_{CS})^{th}$ region of the first time-domain channel, mod represents a modulo operation, and $N_{CS}$ represents a quantity of cyclic shifts.

It is assumed that any group of preambles in the $K_G$ groups of preambles corresponds to one TA value range, and $K_G$ TA value ranges corresponding to the $K_G$ groups of preambles are $K_G$ ranges into which a range $[0, T_{A,max}]$ is evenly divided. In this case, for a specific value of the root $u$, a cyclic shift index of 0 in the $0^{th}$ group of preambles may correspond to the region 0 of the first time-domain channel $\bar{h}_{u,v}$. The network device may detect energy of the first time-domain channel $\bar{h}_{u,v}$ in the region 0, for example, detect energy of an element with a maximum amplitude in the region 0. When the detected energy of the time-domain channel in the region 0 exceeds a preset threshold, the network device considers that the terminal device sends a preamble that is in the $0^{th}$ group of preambles and that corresponds to a root $u$ of a ZC sequence and the cyclic shift index of 0. Therefore, the network device may estimate a TA value based on the time-domain channel in the region 0, and send the TA value to the terminal device. A cyclic shift index of 1 in the $0^{th}$ group of preambles may correspond to a region 1 of the first time-domain channel $\bar{h}_{u,v}$, and the network device may detect the region 1 with reference to the foregoing method for detecting the region 0. That is, a $0^{th}$ cyclic shift to an $(N_{CS}$ -1$)^{th}$ cyclic shift that are in the $0^{th}$ group of preambles correspond to a $0^{th}$ region to an $(N_{CS}$ -1$)^{th}$ region that are of the first time-domain channel.

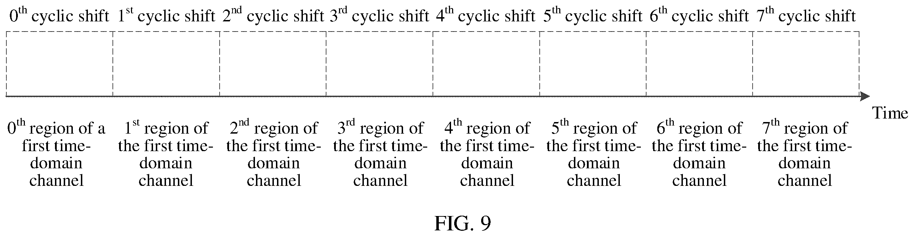

An example in a first implementation of the arrangement manner in the step S803 is used. FIG. 9 shows a correspondence between cyclic shift indexes in the $0^{th}$ group of preambles and regions of the first time-domain channel. The $0^{th}$ cyclic shift corresponds to the $0^{th}$ region of the first time-domain channel; a $1^{st}$ cyclic shift corresponds to a $1^{st}$ region of the first time-domain channel; a $2^{nd}$ cyclic shift corresponds to a $2^{nd}$ region of the first time-domain channel; a $3^{rd}$ cyclic shift corresponds to a $3^{rd}$ region of the first time-domain channel; a $4^{th}$ cyclic shift corresponds to a $4^{th}$ region of the first time-domain channel; a $5^{th}$ cyclic shift corresponds to a $5^{th}$ region of the first time-domain channel; a $6^{th}$ cyclic shift corresponds to a $6^{th}$ region of the first time-domain channel; and a $7^{th}$ cyclic shift corresponds to a $7^{th}$ region of the first time-domain channel.

Because a value of a TA value range corresponding to the $1^{st}$ group of preambles is greater than a value of a TA value range corresponding to the $0^{th}$ group of preambles, a region corresponding to a cyclic shift index p of the $1^{st}$ group of preambles may be offset by one region compared with a region corresponding to a cyclic shift index p of the $0^{th}$ group of preambles. That is, a $p^{th}$ cyclic shift in the $1^{st}$ group of preambles corresponds to a $((p+1) \bmod N_{CS})^{th}$ region of the first time-domain channel. It may be learned that a cyclic shift index of 0 in the $1^{st}$ group of preambles may correspond to the region 1 of the first time-domain channel $\bar{h}_{u,v}$. To be specific, when the network device detects a preamble in the region 1, a root corresponding to the preamble is $u$, and a cyclic shift index is 0. Therefore, the network device may estimate a TA value based on the time-domain channel in the region 1, and send the TA value to the terminal device.

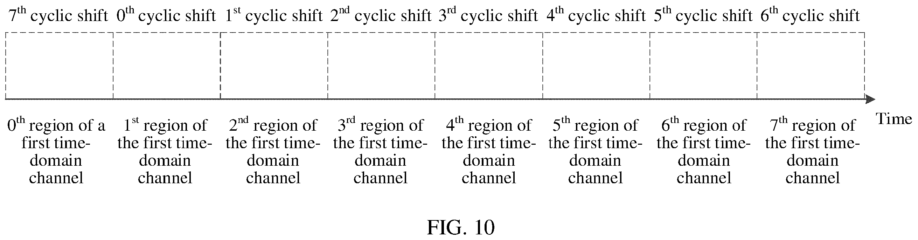

The example in the first implementation of the arrangement manner in the step S803 is still used. FIG. 10 shows a correspondence between cyclic shift indexes in the $1^{st}$ group of preambles and regions of the first time-domain channel. A $7^{th}$ cyclic shift corresponds to the $0^{th}$ region of the first time-domain channel; a $0^{th}$ cyclic shift corresponds to a $1^{st}$ region of the first time-domain channel; a $1^{st}$ cyclic shift corresponds to a $2^{nd}$ region of the first time-domain channel; a $2^{nd}$ cyclic shift corresponds to a $3^{rd}$ region of the first time-domain channel; a $3^{rd}$ cyclic shift corresponds to a $4^{th}$ region of the first time-domain channel; a $4^{th}$ cyclic shift corresponds to a $5^{th}$ region of the first time-domain channel; a $5^{th}$ cyclic shift corresponds to a $6^{th}$ region of the first time-domain channel; and a $6^{th}$ cyclic shift corresponds to a $7^{th}$ region of the first time-domain channel.

By analogy, the $p^{th}$ cyclic shift of the $i^{th}$ group of preambles corresponds to the $((p +i) \bmod N_{CS})^{th}$ region of the first time-domain channel.

It may be understood that, because different groups of preambles correspond to different TA value ranges, corresponding correspondences between cyclic shift indexes of the different groups of preambles and regions of the first time-domain channel are different. Based on a correspondence between cyclic shift indexes of each group of preambles and regions of the first time-domain channel, a base station device may determine a group sequence number, a root index, and a cyclic shift index that are of a preamble sent by a terminal, to avoid a collision that occurs when two terminals use preambles with adjacent cyclic shift indexes to perform sending.

An example in which the $K_G$ TA value ranges corresponding to the $K_G$ groups of preambles are the $K_G$ ranges into which the range $[0, T_{A,\max}]$ is evenly divided. When two terminal devices send preambles that are in the $i^{th}$ group of preambles and that correspond to a same root of a ZC sequence and different cyclic shift indexes, because the two terminal devices correspond to a same group of preambles, the $p^{th}$ cyclic shift of the $i^{th}$ group of preambles corresponds to the $((p+i) \bmod N_{CS})^{th}$ region of the first time-domain channel. In this case, a case in which different cyclic shifts correspond to a same region does not occur. In addition, because TA values of a plurality of terminal devices corresponding to a same group are close, when the terminal device sends a preamble corresponding to the $p^{th}$ cyclic shift of the $i^{th}$ group of preambles, a time-domain channel of the preamble is only in the $((p+i) \bmod N_{CS})^{th}$ region of the first time-domain channel, and is not in another region. Therefore, no collision occurs. When two terminal devices send preambles by using preambles in different groups, because correspondences between cyclic shift indexes of the different groups of preambles and regions are different, the base station may determine, based on a correspondence between the different groups, a group sequence number, a root index, and a cyclic shift index that are of a detected preamble, to avoid a collision.

Optionally, the preamble transmission method provided in this embodiment of this application further includes: The network device determines a TA value based on the group sequence number and the first preamble, and sends the TA value to the terminal device. In this solution, the network device determines the TA value by referring to the first preamble and the group sequence number, so that the TA value corresponding to the first preamble can be accurately calculated.

Specifically, for a method for calculating the TA value by the network device based on the group sequence number and the first preamble, refer to the conventional technology. Details are not described herein again. After calculating the TA value, the network device may send the TA value to the terminal device in a broadcast manner.

In the preamble transmission method provided in this embodiment of this application, the terminal device may design the $K_G$ groups of preambles, and $K_G$ is the integer greater than 1. However, in the conventional technology, there is only one group of preambles, that is, $K_G = 1$. In this method, because the total quantity of preambles in the $K_G$ groups of preambles is positively correlated with the quantity of preamble cyclic shifts, and the quantity of preamble cyclic shifts is positively correlated with the quantity $K_G$ of groups of preambles, the quantity of preamble cyclic shifts may be increased by increasing the quantity of groups of preambles, to further increase the total quantity of preambles. That is, in comparison with the conventional technology, the method provided in this embodiment of this application can increase a preamble capacity. In addition, when the network device detects the preamble, the $p^{th}$ cyclic shift of the $i^{th}$ group of preambles in the $K_G$ groups of preambles corresponds to the $((p+i) \bmod N_{CS})^{th}$ region of the first time-domain channel. That is, correspondences between cyclic shift values or cyclic shift indexes of different groups of preambles and regions are different. Specifically, the region corresponding to the $p^{th}$ cyclic shift of the $i^{th}$ group of preambles is offset by i regions compared with a region corresponding to a $p^{th}$ cyclic shift of the $0^{th}$ group of preambles. In this way, the network device can still determine a group number corresponding to a cyclic shift, and therefore, can correctly detect a preamble, and avoid a collision between different groups of preambles.

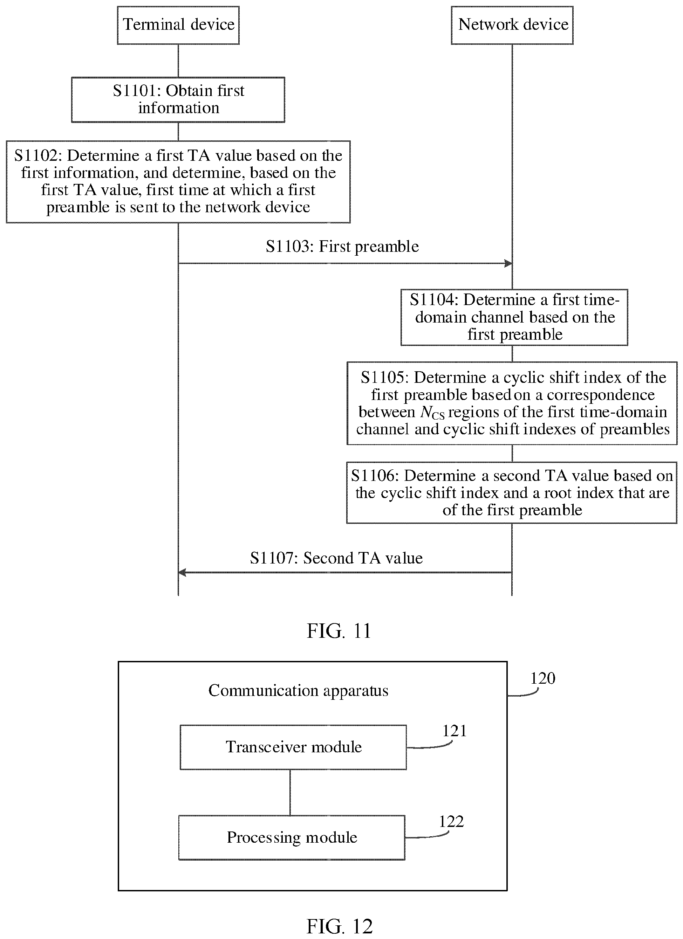

FIG. 11 shows another preamble transmission method according to an embodiment of this application. The preamble transmission method includes the following steps.

S1101: A terminal device obtains first information, where the first information includes at least one of the following: historical TA information, geographical location information, or power information of the terminal device.

For related descriptions of the step S1101, refer to the step S801. Details are not described herein again.

S1102: The terminal device determines a first TA value based on the first information, and determines, based on the first TA value, first time at which a first preamble is sent to a network device, where the first preamble is one of $N_{all}^{root}$ preambles, and $N_{all}^{root}$ is a positive integer greater than 1.

Optionally, the $N_{all}^{root}$ preambles are first arranged in ascending order of cyclic shift indexes, and then arranged in ascending order of root indexes. In this solution, a manner for arranging the preambles may still be a manner used in the conventional technology, and can be compatible with the conventional technology.

For example, the terminal device may randomly select a preamble from the $N_{all}^{root}$ preambles as the first preamble.

Optionally, the first information is a historical TA value of the terminal device. That the terminal device determines a first TA value based on the first information includes: The terminal device determines the historical TA value of the terminal device as the first TA value. In this solution, when the first information is the historical TA value of the terminal device, the first TA value is equivalent to the first information, and no conversion is required.

Optionally, that the terminal device determines a first TA value based on the first information includes: The terminal device determines the first TA value based on the first information and a third parameter. The third parameter is positively correlated with a total quantity $N_{all}^{root}$ of preambles and a quantity of preamble cyclic shifts, and the third parameter is a positive integer greater than 1. In this solution, because the third parameter is positively correlated with the quantity $N_{all}^{root}$ of preambles and the quantity of preamble cyclic shifts, the total quantity of preambles may be increased by increasing the third parameter, or the quantity of cyclic shifts may be increased by increasing the third parameter, to further increase the total quantity of preambles.

For example, the third parameter $K_3$ and the quantity $N_{all}^{root}$ of preambles may satisfy the following formula (24):

$$N_{all}^{root} = K_3 N^{root} \qquad\qquad \text{formula (24),}$$

where

$N^{root}$ is a positive integer, and a value of $N^{root}$ may be preset by the terminal device, or may be set by the network device and sent to the terminal device. This is not limited in this embodiment of this application.

For example, the third parameter $K_3$ and the quantity $N_{CS}$ of cyclic shifts may satisfy the following formula (25):

$$N_{CS} = K_3 N_{CS}^{Ini} \qquad\qquad \text{formula (25),}$$

where

$N_{CS}^{Ini}$ represents a basic quantity of cyclic shifts, and a value of $N_{CS}^{Ini}$ may be preset by the terminal device, or may be set by the network device and sent to the terminal device. This is not limited in this embodiment of this application.

Optionally, the first information is not the historical TA information of the terminal device. That the terminal device determines the first TA value based on the first information and a third parameter includes: The terminal device determines a fourth parameter based on the first information. The terminal device determines the first TA value based on the third parameter, the fourth parameter, and a maximum TA value. In this solution, in this solution, when the first information is not the historical TA information of the terminal device, the first TA value is not equivalent to the first information, and the first information needs to be first converted into the fourth parameter, so that the first TA value can be further obtained.

In this embodiment of this application, the fourth parameter is a TA value. For a specific implementation in which the terminal device determines the fourth parameter based on the first information, refer to the implementation in which the terminal device determines the first parameter based on the first information in the step S802. In other words, a difference between the first parameter and the fourth parameter lies in that the first parameter may be a TA value or a radius value, and the fourth parameter can only be a TA value.

Optionally, the third parameter, the fourth parameter, the maximum TA value, and the first TA value satisfy the following formula (26):

$$T_{A,1} = \frac{T_{A,\max}}{K_3} \left\lfloor K_3 K_4 / T_{A,\max} \right\rfloor \qquad\qquad \text{formula (26),}$$

where

$T_{A,1}$ represents the first TA value; $T_{A,\max}$ represents the maximum TA value; $K_3$ represents the third parameter; $K_4$ represents the fourth parameter; and $\lfloor\;\rfloor$ represents rounding down.

S1103: The terminal device sends the first preamble to the network device at the first time.

S1104: The network device receives the first preamble, and determines a first time-domain channel based on the first preamble, where the first time-domain channel includes $N_{CS}$ regions.

For related descriptions of the step S1104, refer to the step S804. Details are not described herein again.

S1105: The network device determines a cyclic shift index of the first preamble based on a correspondence between the $N_{CS}$ regions of the first time-domain channel and cyclic shift indexes of preambles, where a pth cyclic shift corresponds to a pth region of the first time-domain channel.

In this embodiment of this application, the correspondence between the $N_{CS}$ regions of the first time-domain channel and the cyclic shift indexes of the preambles is the same as that in a conventional technology.

S1106: The network device determines a second TA value based on the cyclic shift index and a root index that are of the first preamble.

Specifically, for a method for calculating the second TA value by the network device based on the cyclic shift index and the root index that are of the first preamble, refer to the conventional technology. Details are not described herein again.

S1107: The network device sends the second TA value to the terminal device.

For example, after calculating the second TA value, the network device may send the second TA value to the terminal device in a broadcast manner.

Optionally, the embodiment shown in FIG. 11 may further include the following steps: The terminal device receives the second TA value from the network device. The terminal device adds the first TA value and the second TA value, to obtain a third TA value. The terminal device sends the third TA value to the network device.

It may be understood that the third TA value is a TA value of the terminal device, the third TA value is greater than the second TA value, and a maximum value of the third TA value is greater than a maximum value of the second TA value. The quantity of cyclic shifts is related to a cell radius, that is, the maximum TA value. Specifically, the quantity of cyclic shifts may be determined by the network device based on a maximum value of a TA value estimated based on a preamble sent by the terminal device.

In the conventional technology, the terminal device sends the preamble to the network device, and does not determine, based on the first TA value, the first time at which the first preamble is sent to the network device (which may alternatively be understood that the first TA value is 0); and the network device estimates the TA value based on the preamble, and the maximum value of the TA value is the maximum value of the third TA value. Clearly, in this application, the first time at which the first preamble is sent to the network device is determined based on the first TA value. In this case, the TA value estimated by the network device is the second TA value, and the maximum value of the second TA value estimated by the network device is less than the maximum value of the third TA value. Therefore, determining the quantity of cyclic shifts based on the maximum value of the second TA value may increase the quantity of cyclic shifts, and further increase a preamble capacity.

In the preamble transmission method provided in this embodiment of this application, the terminal device determines the first TA value based on the first information, and determines, based on the first TA value, the first time at which the first preamble is sent to the network device. In comparison with the conventional technology, the terminal device calculates the TA value in advance and sends the first preamble to the network device, so that the second TA value determined by the network device is small. In other words, the second TA value determined by the network device is far less than a maximum TA value in the conventional technology, and therefore, the cell radius is reduced. As described in the background, a smaller cell radius indicates an increase in the total quantity of preambles, and therefore, the preamble capacity is improved.

It may be understood that, in the foregoing embodiments, the methods and/or the steps implemented by the terminal device may alternatively be implemented by a component (for example, a chip or a circuit) that may be used in a terminal device or a device including a terminal device; and the methods and/or the steps implemented by the network device may be implemented by a component (for example, a chip or a circuit) that may be used in a network device or a device including a network device.

It may be understood that, to implement the foregoing functions, the terminal device or the network device include corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules of the terminal device or the network device may be performed based on the foregoing method embodiments. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, the terminal device or the network device in embodiments of this application may be implemented in a form of a communication apparatus 120 shown in FIG. 12. The communication apparatus 120 includes a transceiver module 121 and a processing module 122. The transceiver module 121 may also be referred to as a transceiver unit, and is configured to implement a transceiver function. For example, the transceiver module may be a transceiver circuit, a transceiver machine, a transceiver, or a communication interface.

An example in which the communication apparatus 120 is the terminal device in the foregoing method embodiments is used. In this case, the processing module 122 is configured to obtain first information. The first information includes at least one of the following: historical timing advance TA information, geographical location information, or power information of the terminal device. The processing module 122 is further configured to determine one group of preambles from $K_G$ groups of preambles based on the first information. $K_G$ is an integer greater than 1, a total quantity of preambles in the $K_G$ groups of preambles is positively correlated with a quantity of preamble cyclic shifts, and the quantity of preamble cyclic shifts is positively correlated with the quantity $K_G$ of groups of preambles. The transceiver module 121 is configured to send a first preamble in the one group of preambles to a network device.

According to the present invention, that the processing module 122 is further configured to determine one group of preambles from $K_G$ groups of preambles based on the first information includes: The processing module is configured to determine a first parameter based on the first information, and determine the one group of preambles from the $K_G$ groups of preambles based on a correspondence between the first parameter and the $K_G$ groups of preambles.

In a possible implementation, an $i^{th}$ group of preambles in the $K_G$ groups of preambles corresponds to at least one piece of TA information, and at least one TA value corresponding to the $i^{th}$ group of preambles is different from at least one TA value corresponding to a $j^{th}$ group of preambles. Both i and j are non-negative integers less than $K_G$, and values of i and j are different.

In a possible implementation, the $i^{th}$ group of preambles in the $K_G$ groups of preambles corresponds to a first TA value range, and the first TA value range corresponding to the $i^{th}$ group of preambles does not overlap a second TA value range corresponding to the $j^{th}$ group of preambles. Both i and j are the non-negative integers less than $K_G$, and the values of i and j are different.

In a possible implementation, a range of the first TA value range is related to the quantity $K_G$ of groups of preambles and a maximum TA value.

In a possible implementation, the first information is the historical TA information of the terminal device, and the first parameter is the historical TA information of the terminal device.

In a possible implementation, the first information is the geographical location information of the terminal device, and the geographical location information of the terminal device is a distance between the terminal device and the network device. That the processing module 122 is further configured to determine a first parameter based on the first information includes: The processing module is configured to determine the first parameter based on the distance between the terminal device and the network device, a cell radius of a cell in which the terminal device is located, and a maximum TA value. The first parameter is TA information, and the first parameter is the same as one of at least one piece of TA information corresponding to the one group of preambles determined from the $K_G$ groups of preambles.

In a possible implementation, the distance between the terminal device and the network device, the cell radius of the cell in which the terminal device is located, and the maximum TA value satisfy the following relationship:

$$P_{1st} = \frac{r_{UE}}{r_{cell}} T_{A,\max} ,$$

where

$P_{1st}$ represents the first parameter; $r_{UE}$ represents the distance between the terminal device and the network device; $r_{cell}$ represents the cell radius of the cell in which the terminal device is located; and $T_{A,\max}$ represents the maximum TA value.

In a possible implementation, the first information is the historical TA information of the terminal device and the geographical location information of the terminal device, and the geographical location information of the terminal device is a distance between the terminal device and the network device. That the processing module 122 is further configured to determine a first parameter based on the first information includes: The processing module is configured to determine the first parameter based on a historical TA value of the terminal device, the distance between the terminal device and the network device, a cell radius of a cell in which the terminal device is located, and a maximum TA value. The first parameter is TA information, and the first parameter is the same as one of at least one piece of TA information corresponding to the one group of preambles determined from the $K_G$ groups of preambles.

In a possible implementation, the historical TA value of the terminal device, the distance between the terminal device and the network device, the cell radius of the cell in which the terminal device is located, and the maximum TA value satisfy the following relationship:

$$P_{1st} = \left( T_{A,old} + \frac{r_{UE}}{r_{cell}} T_{A,\max} \right) / 2 ,$$

where

$P_{1st}$ represents the first parameter; $T_{A,old}$ represents the historical TA value of the terminal device; $r_{UE}$ represents the distance between the terminal device and the network device; $r_{cell}$ represents the cell radius of the cell in which the terminal device is located; and $T_{A,\max}$ represents the maximum TA value.

In a possible implementation, an $i^{th}$ group of preambles in the $K_G$ groups of preambles corresponds to at least one radius value, and the at least one radius value corresponding to the i$^{th}$ group of preambles is different from at least one radius value corresponding to a j$^{th}$ group of preambles. Both i and j are non-negative integers less than $K_G$, and values of i and j are different.

In a possible implementation, the i$^{th}$ group of preambles in the $K_G$ groups of preambles corresponds to a first radius value range, and the first radius value range corresponding to the i$^{th}$ group of preambles does not overlap a second radius value range corresponding to the j$^{th}$ group of preambles. Both i and j are the non-negative integers less than $K_G$, and the values of i and j are different.

In a possible implementation, a range of the first radius value range is related to the quantity $K_G$ of groups of preambles and a cell radius of a cell in which the terminal device is located.

In a possible implementation, the first information is the geographical location information of the terminal device, the geographical location information of the terminal device is a distance between the terminal device and the network device, and the first parameter is the geographical location information of the terminal device.

In a possible implementation, the first information is the historical TA information of the terminal device. That the processing module 122 is further configured to determine a first parameter based on the first information includes: The processing module is configured to determine the first parameter based on a historical TA value of the terminal device, a cell radius of a cell in which the terminal device is located, and a maximum TA value. The first parameter is a radius value, and the first parameter is the same as one of at least one radius value corresponding to the one group of preambles determined from the $K_G$ groups of preambles.

In a possible implementation, the distance between the terminal device and the network device, the cell radius of the cell in which the terminal device is located, and the maximum TA value satisfy the following relationship:

$$P_{1st} = \frac{T_{A,old}}{T_{A,\max}} r_{cell} ,$$

where

$P_{1st}$ represents the first parameter; $T_{A,old}$ represents the historical TA value of the terminal device; $T_{A,\max}$ represents the maximum TA value; and $r_{cell}$ represents the cell radius of the cell in which the terminal device is located.

In a possible implementation, the first information is the historical TA information of the terminal device and the geographical location information of the terminal device, and the geographical location information of the terminal device is a distance between the terminal device and the network device. That the processing module 122 is further configured to determine a first parameter based on the first information includes: The processing module is configured to determine the first parameter based on a historical TA value of the terminal device, the distance between the terminal device and the network device, a cell radius of a cell in which the terminal device is located, and a maximum TA value. The first parameter is a radius value, and the first parameter is the same as one of at least one radius value corresponding to the one group of preambles determined from the $K_G$ groups of preambles.

In a possible implementation, the historical TA value of the terminal device, the distance between the terminal device and the network device, the cell radius of the cell in which the terminal device is located, and the maximum TA value satisfy the following relationship:

$$P_{1st} = \left( \frac{T_{A,old}}{T_{A,\max}} r_{cell} + r_{UE} \right) / 2 ,$$

where

$P_{1st}$ represents the first parameter; $T_{A,old}$ represents the historical TA value of the terminal device; $T_{A,\max}$ represents the maximum TA value; $r_{cell}$ represents the cell radius of the cell in which the terminal device is located; and $r_{UE}$ represents the distance between the terminal device and the network device.

In a possible implementation, the quantity of preamble cyclic shifts and the quantity $K_G$ of groups of preambles satisfy the following relationship:

$$N_{CS} = \left\lfloor L_{RA} / \left( \left\lfloor N_{Step}^{CS,Ini} / K_G \right\rfloor \right) \right\rfloor ,$$

where

$N_{CS}$ represents the quantity of preamble cyclic shifts; $L_{RA}$ represents a length of the preamble; $N_{Step}^{CS,Ini}$ represents a basic step of cyclic shifts; and L ⌋ represents rounding down; or
the quantity of preamble cyclic shifts and the quantity $K_G$ of groups of preambles satisfy the following relationship:

$$N_{CS} = K_G N_{CS}^{Ini},$$

where

$N_{CS}^{Ini}$ represents a basic quantity of cyclic shifts, and $N_{CS}^{Ini}$ is a positive integer greater than 1.

In a possible implementation, the ith group of preambles in the $K_G$ groups of preambles is first arranged in ascending order of cyclic shift indexes, and then arranged in ascending order of root indexes, and an (i+1)th group of preambles in the $K_G$ groups of preambles is arranged sequentially after the ith group of preambles is arranged; in a value range $\left[ iN_{CS}^{Ini} - i, (i+1)N_{CS}^{Ini} - 1 - i \right]$ of cyclic shift indexes, the ith group of preambles in the $K_G$ groups of preambles is first arranged in ascending order of the cyclic shift indexes, and then arranged in ascending order of root indexes; or the ith group of preambles in the $K_G$ groups of preambles is first arranged in ascending order of cyclic shift indexes, where the cyclic shift indexes are incremented by an interval of $K_G$, and then is arranged in ascending order of root indexes, and the ith group of preambles in the $K_G$ groups of preambles is the same as the jth group of preambles.

An example in which the communication apparatus 120 is the network device in the foregoing method embodiments is used. In this case, the transceiver module 121 is configured to receive a first preamble. The processing module 122 is configured to determine a first time-domain channel based on the first preamble. The first time-domain channel includes $N_{CS}$ regions. The processing module 122 is further configured to determine, based on a correspondence between the $N_{CS}$ regions of the first time-domain channel and cyclic shift indexes of $K_G$ groups of preambles, a cyclic shift index and a group sequence number that are of the first preamble. A pth cyclic shift of an ith group of preambles in the $K_G$ groups of preambles corresponds to a $((p+i) \bmod N_{CS})^{th}$ region of the first time-domain channel, mod represents a modulo operation, and $N_{CS}$ represents a quantity of cyclic shifts.

In a possible implementation, the processing module 122 is further configured to determine a TA value based on the group sequence number and the first preamble; and the transceiver module 121 is further configured to send the TA value to a terminal device.

Alternatively, an example in which the communication apparatus 120 is the terminal device in the foregoing method embodiments is used. In this case, the processing module 122 is configured to obtain first information. The first information includes at least one of the following: historical timing advance TA information, geographical location information, or power information of the terminal device. The processing module 122 is further configured to determine a first TA value based on the first information, and determine, based on the first TA value, first time at which a first preamble is sent to a network device. The first preamble is one of $N_{all}^{root}$ preambles, and $N_{all}^{root}$ is a positive integer greater than 1. The transceiver module 121 is configured to send the first preamble to the network device at the first time.

In a possible implementation, that the processing module 122 is further configured to determine a first TA value based on the first information includes: The processing module is configured to determine the first TA value based on the first information and a third parameter. The third parameter is positively correlated with a total quantity $N_{all}^{root}$ of preambles and a quantity of preamble cyclic shifts, and the third parameter is a positive integer greater than 1.

In a possible implementation, the first information is a historical TA value of the terminal device. That the processing module 122 is further configured to determine a first TA value based on the first information includes: The processing module is configured to determine the historical TA value of the terminal device as the first TA value.

In a possible implementation, the first information is not the historical TA information of the terminal device. That the processing module 122 is further configured to determine the first TA value based on the first information and a third parameter includes: The processing module is configured to determine a fourth parameter based on the first information, and determine the first TA value based on the third parameter, the fourth parameter, and a maximum TA value.

In a possible implementation, the $N_{all}^{root}$ preambles are first arranged in ascending order of cyclic shift indexes, and then arranged in ascending order of root indexes.

In a possible implementation, the third parameter, the fourth parameter, the maximum TA value, and the first TA value satisfy the following relationship:

$$T_{A,1} = \frac{T_{A,\max}}{K_3} \left\lfloor K_3 K_4 / T_{A,\max} \right\rfloor,$$

where

$T_{A,1}$ represents the first TA value; $T_{A,\max}$ represents the maximum TA value; $K_3$ represents the third parameter; $K_4$ represents the fourth parameter; and $\lfloor \ \rfloor$ represents rounding down.

In a possible implementation, the transceiver module 121 is further configured to receive a second TA value from the network device. The processing module 122 is further configured to add the first TA value and the second TA value, to obtain a third TA value. The transceiver module 121 is further configured to send the third TA value to the network device.

Alternatively, an example in which the communication apparatus 120 is the network device in the foregoing method embodiments is used. In this case, the transceiver module 121 is configured to receive a first preamble. The processing module 122 is further configured to determine a first time-domain channel based on the first preamble. The first time-domain channel includes $N_{CS}$ regions. The processing module 122 is configured to determine a cyclic shift index of the first preamble based on a correspondence between the $N_{CS}$ regions of the first time-domain channel and cyclic shift indexes of preambles. A $p^{th}$ cyclic shift corresponds to a $p^{th}$ region of the first time-domain channel. The processing module 122 is further configured to determine a second TA value based on the cyclic shift index and a root index that are of the first preamble. The transceiver module 121 is configured to send the second TA value to a terminal device.

All related content of the steps in the foregoing method embodiments may be cited in function descriptions of the corresponding functional modules. Details are not described herein again.

In this embodiment, the communication apparatus 120 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions.

When the communication apparatus 120 is the terminal device in the foregoing method embodiments, in a simple embodiment, a person skilled in the art may figure out that the communication apparatus 120 may be in a form of the terminal device 501 shown in FIG. 6.

For example, the processor 5011 in the terminal device 501 shown in FIG. 6 may invoke the computer-executable instructions stored in the memory 5012, to enable the terminal device 501 to perform the IMS registration method in the foregoing method embodiments. Specifically, functions/implementation processes of the processing module 122 in FIG. 12 may be implemented by the processor 5011 in the terminal device 501 shown in FIG. 6 by invoking the computer-executable instructions stored in the memory 5012. Functions/implementation processes of the transceiver module 121 in FIG. 12 may be implemented by the transceiver 5013 shown in FIG. 6.

Alternatively, when the communication apparatus 120 is the terminal device in the foregoing method embodiments, in a simple embodiment, a person skilled in the art may figure out that the communication apparatus 120 may be in a form of the terminal device 501 shown in FIG. 7.

For example, the processor 150 in the terminal device 501 shown in FIG. 7 may invoke computer-executable instructions stored in a memory (including the internal memory 121 or the external memory connected to the external memory interface 120), to enable the terminal device 501 to perform the preamble transmission method in the foregoing method embodiments. Specifically, functions/implementation processes of the transceiver module 121 and the processing module 122 in FIG. 12 may be implemented by the processor 150 in the terminal device 501 shown in FIG. 7 by invoking the computer-executable instructions stored in the memory. Alternatively, the functions/implementation processes of the processing module 122 in FIG. 12 may be implemented by the processor 150 in the terminal device 501 shown in FIG. 7 by invoking the computer-executable instructions stored in the memory, and the functions/implementation processes of the transceiver module 121 in FIG. 12 may be implemented by the wireless communication module 160 shown in FIG. 7.

Alternatively, when the communication apparatus 120 is the network device in the foregoing method embodiments, in a simple embodiment, a person skilled in the art may figure out that the communication apparatus 120 may be in a form of the network device 502 shown in FIG. 6.

For example, the processor 5021 in the network device 502 shown in FIG. 6 may invoke computer-executable instructions stored in the memory 5022, to enable the network device 502 to perform the preamble transmission method in the foregoing method embodiments. Specifically, functions/implementation processes of the processing module 122 in FIG. 12 may be implemented by the processor 5021 in the network device 502 shown in FIG. 6 by invoking the computer-executable instructions stored in the memory 5022. Functions/implementation processes of the transceiver module 121 in FIG. 12 may be implemented by the transceiver 5023 shown in FIG. 6.

Because the communication apparatus 120 provided in this embodiment may perform the foregoing preamble transmission method, for technical effects that can be obtained by the communication apparatus 120, reference may be made to the foregoing method embodiments. Details are not described herein again.

It should be noted that one or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedures. The processor may be built into a SoC (system on chip) or an ASIC, or may be an independent semiconductor chip. In addition to a core configured to perform calculation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface. The at least one processor is coupled to a memory through an interface. When the at least one processor executes a computer program or instructions in the memory, the method in any one of the foregoing method embodiments is performed. In a possible implementation, a first device further includes the memory. Optionally, the chip system may include a chip, or may include a chip and another discrete component. This is not specifically limited in this embodiment of this application.

A part or all of the foregoing embodiments may be implemented by software, hardware, firmware, or any combination thereof. When a software program is used to implement embodiments, a part or all of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example descriptions of this application defined by the appended claims, and are considered as any of or all modifications, variations, combinations that cover the scope of this application. Clearly, a person skilled in the art can make various modifications and variations to this application without departing from the scope of this application. In this way, this application is intended to cover these modifications and variations of this application provided that they fall within the scope of the claims of this application.

**Claims**

1. A preamble transmission method, comprising:

   obtaining (S801), by a first communication apparatus (120), first information, wherein the first information comprises at least one of the following: historical timing advance TA information, geographical location information, or power information of the first communication apparatus (120);
   determining (S802), by the first communication apparatus (120), one group of preambles from $K_G$ groups of preambles based on the first information, wherein $K_G$ is an integer greater than 1, a total quantity of preambles in the $K_G$ groups of preambles is positively correlated with a quantity of preamble cyclic shifts, and the quantity of preamble cyclic shifts is positively correlated with the quantity $K_G$ of groups of preambles, wherein the determining, by the first communication apparatus (120), one group of preambles from $K_G$ groups of preambles based on the first information comprises:

determining, by the first communication apparatus (120), a first parameter based on the first information, and determining the one group of preambles from the $K_G$ groups of preambles based on a correspondence between the first parameter and the $K_G$ groups of preambles,

wherein an $i^{th}$ group of preambles in the $K_G$ groups of preambles is first arranged in ascending order of cyclic shift indexes, and then arranged in ascending order of root indexes, and an $(i+1)^{th}$ group of preambles in the $K_G$ groups of preambles is arranged sequentially after the $i^{th}$ group of preambles is arranged;

in a value range $\left[ iN_{CS}^{Ini} - i, (i+1)N_{CS}^{Ini} - 1 - i \right]$ of cyclic shift indexes, the $i^{th}$ group of preambles in the $K_G$ groups of preambles is first arranged in ascending order of the cyclic shift indexes, and then arranged in ascending order of root indexes; or

the $i^{th}$ group of preambles in the $K_G$ groups of preambles is first arranged in ascending order of cyclic shift indexes, wherein the cyclic shift indexes are incremented by an interval of $K_G$, and then is arranged in ascending order of root indexes, and the $i^{th}$ group of preambles in the $K_G$ groups of preambles is the same as the $j^{th}$ group of preambles; and

sending (S803), by the first communication apparatus (120), a first preamble in the one group of preambles to a network device (502).

2. The method according to claim 1, wherein the $i^{th}$ group of preambles in the $K_G$ groups of preambles corresponds to at least one piece of TA information, and at least one TA value corresponding to the $i^{th}$ group of preambles is different from at least one TA value corresponding to a $j^{th}$ group of preambles, wherein both i and j are non-negative integers less than $K_G$, and values of i and j are different.

3. The method according to any one of claims 1 to 2, wherein the $i^{th}$ group of preambles in the $K_G$ groups of preambles corresponds to a first TA value range, and the first TA value range corresponding to the $i^{th}$ group of preambles does not overlap a second TA value range corresponding to the $j^{th}$ group of preambles, wherein both i and j are the non-negative integers less than $K_G$, and the values of i and j are different.

4. The method according to claim 3, wherein a range of the first TA value range is related to the quantity $K_G$ of groups of preambles and a maximum TA value.

5. The method according to claim 1, wherein the first information is the historical TA information of the first communication apparatus (120), and the first parameter is the historical TA information of the first communication apparatus (120).

6. The method according to claim 1, wherein the first information is the geographical location information of the first communication apparatus (120), and the geographical location information of the first communication apparatus (120) is a distance between the first communication apparatus (120) and the network device (502); and

the determining, by the first communication apparatus (120), a first parameter based on the first information comprises:

determining, by the first communication apparatus (120), the first parameter based on the distance between the first communication apparatus (120) and the network device (502), a cell radius of a cell in which the first communication apparatus (120) is located, and a maximum TA value, wherein the first parameter is TA information, and the first parameter is the same as one of at least one piece of TA information corresponding to the one group of preambles determined from the $K_G$ groups of preambles.

7. The method according to claim 1, wherein the first information is the historical TA information of the first communication apparatus (120) and the geographical location information of the first communication apparatus (120), and the geographical location information of the first communication apparatus (120) is a distance between the first communication apparatus (120) and the network device (502); and

the determining, by the first communication apparatus (120), a first parameter based on the first information comprises:

determining, by the first communication apparatus (120), the first parameter based on a historical TA value of the first communication apparatus (120), the distance between the first communication apparatus (120) and the network device (502), a cell radius of a cell in which the first communication apparatus (120) is located, and a maximum TA value, wherein the first parameter is TA information, and the first parameter is the same as one of at least one piece of TA information corresponding to the one group of preambles determined from the $K_G$ groups of preambles.

8. The method according to claim 1, wherein an $i^{th}$ group of preambles in the $K_G$ groups of preambles corresponds to at least one radius value, and the at least one radius value corresponding to the $i^{th}$ group of preambles is different from at least one radius value corresponding to a $j^{th}$ group of preambles, wherein both i and j are non-negative integers less than $K_G$, and values of i and j are different.

9. The method according to claim 1 or 8, wherein the $i^{th}$ group of preambles in the $K_G$ groups of preambles corresponds to a first radius value range, and the first radius value range corresponding to the $i^{th}$ group of preambles does not overlap a second radius value range corresponding to the $j^{th}$ group of preambles, wherein both i and j are the non-negative integers less than $K_G$, and the values of i and j are different.

10. The method according to claim 9, wherein a range of the first radius value range is related to the quantity $K_G$ of groups of preambles and a cell radius of a cell in which the first communication apparatus (120) is located.

11. The method according to claim 1, wherein the first information is the geographical location information of the first communication apparatus (120), the geographical location information of the first communication apparatus (120) is a distance between the first communication apparatus (120) and the network device (502), and the first parameter is the geographical location information of the first communication apparatus (120).

12. The method according to claim 1, wherein the first information is the historical TA information of the first communication apparatus (120); and

the determining, by the first communication apparatus (120), a first parameter based on the first information comprises:
determining, by the first communication apparatus (120), the first parameter based on a historical TA value of the first communication apparatus (120), a cell radius of a cell in which the first communication apparatus (120) is located, and a maximum TA value, wherein the first parameter is a radius value, and the first parameter is the same as one of at least one radius value corresponding to the one group of preambles determined from the $K_G$ groups of preambles.

13. The method according to claim 1, wherein the first information is the historical TA information of the first communication apparatus (120) and the geographical location information of the first communication apparatus (120), and the geographical location information of the first communication apparatus (120) is a distance between the first communication apparatus (120) and the network device (502); and

the determining, by the first communication apparatus (120), a first parameter based on the first information comprises:
determining, by the first communication apparatus (120), the first parameter based on a historical TA value of the first communication apparatus (120), the distance between the first communication apparatus (120) and the network device (502), a cell radius of a cell in which the first communication apparatus (120) is located, and a maximum TA value, wherein the first parameter is a radius value, and the first parameter is the same as one of at least one radius value corresponding to the one group of preambles determined from the $K_G$ groups of preambles.

**Patentansprüche**

1. Präambelübertragungsverfahren, umfassend:

Erlangen (S801) erster Informationen durch eine erste Kommunikationsvorrichtung (120), wobei die ersten Informationen mindestens eines der Folgenden umfassen: historische Timing-Advance-(TA-)Informationen, geografische Standortinformationen oder Leistungsinformationen der ersten Kommunikationsvorrichtung (120); Bestimmen (S802) einer Gruppe von Präambeln aus $K_G$ Gruppen von Präambeln durch die erste Kommunikationsvorrichtung (120) basierend auf den ersten Informationen, wobei $K_G$ eine Ganzzahl größer als 1 ist, eine Gesamtmenge von Präambeln in den $K_G$ Gruppen von Präambeln positiv mit einer Menge von zyklischen Präambelverschiebungen korreliert ist und die Menge von zyklischen Präambelverschiebungen positiv mit der Menge $K_G$ von Gruppen von Präambeln korreliert ist, wobei das Bestimmen einer Gruppe von Präambeln aus $K_G$ Gruppen von Präambeln basierend auf den ersten Informationen durch die erste Kommunikationsvorrichtung (120) Folgendes umfasst:

Bestimmen eines ersten Parameters durch die erste Kommunikationsvorrichtung (120) basierend auf den ersten Informationen und Bestimmen der einen Gruppe von Präambeln aus den $K_G$ Gruppen von Präambeln basierend auf einer Entsprechung zwischen dem ersten Parameter und den $K_G$ Gruppen von Präambeln, wobei eine i-te Gruppe von Präambeln in den $K_G$ Gruppen von Präambeln zuerst in aufsteigender Reihenfolge der zyklischen Verschiebungsindizes und dann in aufsteigender Reihenfolge der Stammindizes angeordnet wird, und eine (i+1)$^{\text{-te}}$ Gruppe von Präambeln in den $K_G$ Gruppen von Präambeln sequenziell angeordnet wird, nachdem die i$^{\text{-te}}$ Gruppe von Präambeln angeordnet ist;

in einem Wertebereich $\left[ i N_{CS}^{Ini} - i, (i + 1) N_{CS}^{Ini} - 1 - i \right]$ von zyklischen Verschiebungsindizes die i$^{\text{-te}}$ Gruppe von Präambeln in den $K_{G}$ Gruppen von Präambeln zuerst in aufsteigender Reihenfolge der zyklischen Verschiebungsindizes und dann in aufsteigender Reihenfolge der Stammindizes angeordnet wird; oder

die i$^{\text{-te}}$ Gruppe von Präambeln in den $K_G$ Gruppen von Präambeln zunächst in aufsteigender Reihenfolge der zyklischen Verschiebungsindizes angeordnet wird, wobei die zyklischen Verschiebungsindizes um ein Intervall von $K_G$ erhöht werden, und dann in aufsteigender Reihenfolge der Stammindizes angeordnet wird, und die i$^{\text{-te}}$ Gruppe von Präambeln in den $K_G$ Gruppen von Präambeln dieselbe wie die j$^{\text{-te}}$ Gruppe von Präambeln ist; und

Senden (S803) einer ersten Präambel in der einen Gruppe von Präambeln durch die erste Kommunikationsvorrichtung (120) an eine Netzwerkvorrichtung (502).

2. Verfahren nach Anspruch 1, wobei die i$^{\text{-te}}$ Gruppe von Präambeln in den $K_G$ Gruppen von Präambeln mindestens einem Teil von TA-Informationen entspricht und sich mindestens ein der i$^{\text{-ten}}$ Gruppe von Präambeln entsprechende TA-Wert von mindestens einem einer j$^{\text{-ten}}$ Gruppe von Präambeln entsprechenden TA-Wert unterscheidet, wobei sowohl i als auch j nicht-negative Ganzzahlen kleiner als $K_G$ sind und die Werte von i und j unterschiedlich sind.

3. Verfahren nach einem der Ansprüche 1 bis 2, wobei die i$^{\text{-te}}$ Gruppe von Präambeln in den $K_G$ Gruppen von Präambeln einem ersten TA-Wertebereich entspricht und der erste der i$^{\text{-ten}}$ Gruppe von Präambeln entsprechende TA-Wertebereich sich nicht mit einem zweiten der j$^{\text{-ten}}$ Gruppe von Präambeln entsprechenden TA-Wertebereich überschneidet, wobei sowohl i als auch j nicht-negative Ganzzahlen kleiner als $K_G$ sind und die Werte von i und j unterschiedlich sind.

4. Verfahren nach Anspruch 3, wobei ein Bereich des ersten TA-Wertebereichs auf die Menge $K_G$ der Gruppen von Präambeln und einen maximalen TA-Wert bezogen ist.

5. Verfahren nach Anspruch 1, wobei die ersten Informationen die historischen TA-Informationen der ersten Kommunikationsvorrichtung (120) sind und der erste Parameter die historischen TA-Informationen der ersten Kommunikationsvorrichtung (120) ist.

6. Verfahren nach Anspruch 1, wobei die ersten Informationen die geografischen Standortinformationen der ersten Kommunikationsvorrichtung (120) sind und die geografischen Standortinformationen der ersten Kommunikationsvorrichtung (120) eine Entfernung zwischen der ersten Kommunikationsvorrichtung (120) und der Netzwerkvorrichtung (502) sind; und
das Bestimmen eines ersten Parameters basierend auf den ersten Informationen durch die erste Kommunikationsvorrichtung (120) Folgendes umfasst:
Bestimmen des ersten Parameters durch die erste Kommunikationsvorrichtung (120) basierend auf der Entfernung zwischen der ersten Kommunikationsvorrichtung (120) und der Netzwerkvorrichtung (502), einem Zellenradius einer Zelle, in der sich die erste Kommunikationsvorrichtung (120) befindet, und einem maximalen TA-Wert, wobei der erste Parameter TA-Informationen ist und der erste Parameter derselbe ist wie einer von mindestens einem Teil von TA-Informationen, die der einen Gruppe von Präambeln entspricht, die aus den $K_G$ Gruppen von Präambeln bestimmt wurde.

7. Verfahren nach Anspruch 1, wobei die ersten Informationen die historischen TA-Informationen der ersten Kommunikationsvorrichtung (120) und die geografischen Standortinformationen der ersten Kommunikationsvorrichtung (120) sind und die geografischen Standortinformationen der ersten Kommunikationsvorrichtung (120) eine Entfernung zwischen der ersten Kommunikationsvorrichtung (120) und der Netzwerkvorrichtung (502) sind; und
das Bestimmen eines ersten Parameters basierend auf den ersten Informationen durch die erste Kommunikationsvorrichtung (120) Folgendes umfasst:
Bestimmen des ersten Parameters durch die erste Kommunikationsvorrichtung (120) basierend auf einem historischen TA-Wert der ersten Kommunikationsvorrichtung (120), der Entfernung zwischen der ersten Kommunikationsvorrichtung (120) und der Netzwerkvorrichtung (502), einem Zellenradius einer Zelle, in der sich die erste Kommunikationsvorrichtung (120) befindet, und einem maximalen TA-Wert, wobei der erste Parameter TA-Informationen ist und der erste Parameter derselbe ist wie einer von mindestens einem Teil von TA-Informationen, die der einen Gruppe von Präambeln entspricht, die aus den $K_G$ Gruppen von Präambeln bestimmt wurde.

8. Verfahren nach Anspruch 1, wobei eine i-te Gruppe von Präambeln in den $K_G$ Gruppen von Präambeln mindestens einem Radiuswert entspricht und sich der mindestens eine der i-ten Gruppe von Präambeln entsprechende Radiuswert von mindestens einem einer j-ten Gruppe von Präambeln entsprechenden Radiuswert unterscheidet, wobei sowohl i als auch j nicht-negative Ganzzahlen kleiner als $K_G$ sind und die Werte von i und j unterschiedlich sind.

9. Verfahren nach Anspruch 1 bis 8, wobei die i-te Gruppe von Präambeln in den $K_G$ Gruppen von Präambeln einem ersten Radiuswertebereich entspricht und der erste der i-ten Gruppe von Präambeln entsprechende Radiuswertebereich sich nicht mit einem zweiten der j-ten Gruppe von Präambeln entsprechenden Radiuswertebereich überschneidet, wobei sowohl i als auch j nicht-negative Ganzzahlen kleiner als $K_G$ sind und die Werte von i und j unterschiedlich sind.

10. Verfahren gemäß Anspruch 9, wobei ein Bereich des ersten Radiuswertebereichs auf die Menge $K_G$ von Gruppen von Präambeln und einem Zellenradius einer Zelle bezogen ist, in der sich die erste Kommunikationsvorrichtung (120) befindet.

11. Verfahren nach Anspruch 1, wobei die ersten Informationen die geografischen Standortinformationen der ersten Kommunikationsvorrichtung (120) sind, die geografischen Standortinformationen der ersten Kommunikationsvorrichtung (120) eine Entfernung zwischen der ersten Kommunikationsvorrichtung (120) und der Netzwerkvorrichtung (502) sind, und der erste Parameter die geographischen Informationen der ersten Kommunikationsvorrichtung (120) ist.

12. Verfahren gemäß Anspruch 1, wobei die ersten Informationen die historischen TA-Informationen der ersten Kommunikationsvorrichtung (120) sind; und
das Bestimmen eines ersten Parameters basierend auf den ersten Informationen durch die erste Kommunikationsvorrichtung (120) Folgendes umfasst:
Bestimmen des ersten Parameters durch die erste Kommunikationsvorrichtung (120) basierend auf einem historischen TA-Wert der ersten Kommunikationsvorrichtung (120), einem Zellenradius einer Zelle, in der sich die erste Kommunikationsvorrichtung (120) befindet, und einem maximalen TA-Wert, wobei der erste Parameter ein Radiuswert ist und der erste Parameter derselbe ist wie einer von mindestens einem Radiuswert, der der einen Gruppe von Präambeln entspricht, die aus den $K_G$ Gruppen von Präambeln bestimmt wurde.

13. Verfahren nach Anspruch 1, wobei die ersten Informationen die historischen TA-Informationen der ersten Kommunikationsvorrichtung (120) und die geografischen Standortinformationen der ersten Kommunikationsvorrichtung (120) sind und die geografischen Standortinformationen der ersten Kommunikationsvorrichtung (120) eine Entfernung zwischen der ersten Kommunikationsvorrichtung (120) und der Netzwerkvorrichtung (502) sind; und
das Bestimmen eines ersten Parameters basierend auf den ersten Informationen durch die erste Kommunikationsvorrichtung (120) Folgendes umfasst:
Bestimmen des ersten Parameters durch die erste Kommunikationsvorrichtung (120) basierend auf einem historischen TA-Wert der ersten Kommunikationsvorrichtung (120), der Entfernung zwischen der ersten Kommunikationsvorrichtung (120) und der Netzwerkvorrichtung (502), einem Zellenradius einer Zelle, in der sich die erste Kommunikationsvorrichtung (120) befindet, und einem maximalen TA-Wert, wobei der erste Parameter ein Radiuswert ist und der erste Parameter derselbe ist wie einer von mindestens einem Radiuswert, der der einen Gruppe von Präambeln entspricht, die aus den $K_G$ Gruppen von Präambeln bestimmt wurde.

## Revendications

1. Procédé de transmission de préambule, comprenant :

l'obtention (S801), par un premier appareil de communication (120), de premières informations, dans lequel les premières informations comprennent au moins l'un des éléments suivants : des informations d'avance temporelle, TA, historique, des informations de localisation géographique ou des informations de puissance du premier appareil de communication (120) ;
la détermination (S802), par le premier appareil de communication (120), d'un groupe de préambules parmi $K_G$ groupes de préambules sur la base des premières informations, dans lequel $K_G$ est un entier supérieur à 1, la

42

quantité totale de préambules dans les $K_G$ groupes de préambules est positivement corrélée à une quantité de décalages cycliques de préambules, et la quantité de décalages cycliques de préambules est positivement corrélée à la quantité $K_G$ de groupes de préambules, dans lequel la détermination, par le premier appareil de communication (120), d'un groupe de préambules parmi $K_G$ groupes de préambules sur la base des premières informations comprend :

la détermination, par le premier appareil de communication (120), d'un premier paramètre sur la base des premières informations, et la détermination de l'un groupe de préambules parmi les $K_G$ groupes de préambules sur la base d'une correspondance entre le premier paramètre et les $K_G$ groupes de préambules, dans lequel un $i^{ème}$ groupe de préambules dans les $K_G$ groupes de préambules est d'abord agencé dans l'ordre croissant des indices de décalage cyclique, puis agencé dans l'ordre croissant des indices de racine, et un $(i+1)^{ème}$ groupe de préambules dans les $K_G$ groupes de préambules est agencé séquentiellement après que le $i^{ème}$ groupe de préambules est agencé ;

dans une plage de valeurs $\left[ iN_{CS}^{Ini} - i, (i + 1)N_{CS}^{Ini} - 1 - i \right]$ d'indices de décalage cyclique, le $i^{ème}$ groupe de préambules dans les $K_G$ groupes de préambules est d'abord agencé dans l'ordre croissant des indices de décalage cyclique, puis agencé dans l'ordre croissant des indices racines ; ou le $i^{ème}$ groupe de préambules dans les $K_G$ groupes de préambules est d'abord agencé par ordre croissant d'indices de décalage cyclique, dans lequel les indices de décalage cyclique sont incrémentés d'un intervalle de $K_G$, puis est agencé dans l'ordre croissant d'indices racines, et le $i^{ème}$ groupe de préambules dans les $K_G$ groupes de préambules est le même que le $j^{ème}$ groupe de préambules ; et

l'envoi (S803), par le premier appareil de communication (120), d'un premier préambule dans l'un groupe de préambules à un dispositif réseau (502).

2. Procédé selon la revendication 1, dans lequel le $i^{ème}$ groupe de préambules dans les $K_G$ groupes de préambules correspond à au moins une information TA, et au moins une valeur TA correspondant au $i^{ème}$ groupe de préambules est différente d'au moins une valeur TA correspondant à un $j^{ème}$ groupe de préambules, dans lequel i et j sont tous deux des entiers non négatifs inférieurs à $K_G$, et les valeurs de i et j sont différentes.

3. Procédé selon l'une quelconque des revendications 1 à 2, dans lequel le $i^{ème}$ groupe de préambules dans les $K_G$ groupes de préambules correspond à une première plage de valeurs TA, et la première plage de valeurs TA correspondant au $i^{ème}$ groupe de préambules ne chevauche pas une seconde plage de valeurs TA correspondant au $j^{ème}$ groupe de préambules, dans lequel i et j sont tous deux des entiers non négatifs inférieurs à $K_G$, et les valeurs de i et j sont différentes.

4. Procédé selon la revendication 3, dans lequel une plage de la première plage de valeurs TA est liée à la quantité $K_G$ de groupes de préambules et à une valeur TA maximale.

5. Procédé selon la revendication 1, dans lequel les premières informations sont les informations TA historiques du premier appareil de communication (120), et le premier paramètre est l'ensemble d'informations TA historiques du premier appareil de communication (120).

6. Procédé selon la revendication 1, dans lequel les premières informations sont les informations de localisation géographique du premier appareil de communication (120), et les informations de localisation géographique du premier appareil de communication (120) sont une distance entre le premier appareil de communication (120) et le dispositif réseau (502) ; et
la détermination, par le premier appareil de communication (120), d'un premier paramètre sur la base des premières informations comprend :
la détermination, par le premier appareil de communication (120), du premier paramètre sur la base de la distance entre le premier appareil de communication (120) et le dispositif de réseau (502), d'un rayon de cellule d'une cellule dans laquelle le premier appareil de communication (120) est situé, et d'une valeur TA maximale, dans lequel le premier paramètre est un ensemble d'informations TA, et le premier paramètre est le même que l'un d'au moins une information TA correspondant à l'un groupe de préambules déterminé à partir des $K_G$ groupes de préambules.

7. Procédé selon la revendication 1, dans lequel les premières informations sont les informations TA historiques du premier appareil de communication (120) et les informations de localisation géographique du premier appareil de communication (120), et les informations de localisation géographique du premier appareil de communication (120) sont une distance entre le premier appareil de communication (120) et le dispositif réseau (502) ; et la détermination, par le premier appareil de communication (120), d'un premier paramètre sur la base des premières informations comprend :

la détermination, par le premier appareil de communication (120), du premier paramètre sur la base d'une valeur TA historique du premier appareil de communication (120), de la distance entre le premier appareil de communication (120) et le dispositif de réseau (502), d'un rayon de cellule d'une cellule dans laquelle le premier appareil de communication (120) est situé, et d'une valeur TA maximale, dans lequel le premier paramètre est un ensemble d'informations TA, et le premier paramètre est le même que l'un d'au moins une information TA correspondant à l'un groupe de préambules déterminé à partir des $K_G$ groupes de préambules.

8. Procédé selon la revendication 1, dans lequel un i$^{ème}$ groupe de préambules dans les $K_G$ groupes de préambules correspond à au moins une valeur de rayon, et l'au moins une valeur de rayon correspondant au i$^{ème}$ groupe de préambules est différente d'au moins une valeur de rayon correspondant à un j$^{ème}$ groupe de préambules, dans lequel i et j sont tous deux des entiers non négatifs inférieurs à $K_G$, et les valeurs de i et j sont différentes.

9. Procédé selon la revendication 1 ou 8, dans lequel le i$^{ème}$ groupe de préambules dans les $K_G$ groupes de préambules correspond à une première plage de valeurs de rayon, et la première plage de valeurs de rayon correspondant au i$^{ème}$ groupe de préambules ne chevauche pas une seconde plage de valeurs de rayon correspondant au j$^{ème}$ groupe de préambules, dans lequel i et j sont tous deux des entiers non négatifs inférieurs à $K_G$, et les valeurs de i et j sont différentes.

10. Procédé selon la revendication 9, dans lequel une plage de la première plage de valeurs de rayon est liée à la quantité $K_G$ de groupes de préambules et à un rayon de cellule d'une cellule dans laquelle le premier appareil de communication (120) est situé.

11. Procédé selon la revendication 1, dans lequel les premières informations sont les informations de localisation géographique du premier appareil de communication (120), les informations de localisation géographique du premier appareil de communication (120) sont une distance entre le premier appareil de communication (120) et le dispositif réseau (502), et le premier paramètre est l'ensemble d'informations de localisation géographique du premier appareil de communication (120).

12. Procédé selon la revendication 1, dans lequel les premières informations sont les informations TA historiques du premier appareil de communication (120) ; et
la détermination, par le premier appareil de communication (120), d'un premier paramètre sur la base des premières informations comprend :
la détermination, par le premier appareil de communication (120), du premier paramètre sur la base d'une valeur TA historique du premier appareil de communication (120), d'un rayon de cellule d'une cellule dans laquelle le premier appareil de communication (120) est situé, et d'une valeur TA maximale, dans lequel le premier paramètre est une valeur de rayon, et le premier paramètre est le même que l'un d'au moins une valeur de rayon correspondant à l'un groupe de préambules déterminé à partir des $K_G$ groupes de préambules.

13. Procédé selon la revendication 1, dans lequel les premières informations sont les informations TA historiques du premier appareil de communication (120) et les informations de localisation géographique du premier appareil de communication (120), et les informations de localisation géographique du premier appareil de communication (120) sont une distance entre le premier appareil de communication (120) et le dispositif réseau (502) ; et la détermination, par le premier appareil de communication (120), d'un premier paramètre sur la base des premières informations comprend :
la détermination, par le premier appareil de communication (120), du premier paramètre sur la base d'une valeur TA historique du premier appareil de communication (120), de la distance entre le premier appareil de communication (120) et le dispositif de réseau (502), d'un rayon de cellule d'une cellule dans laquelle le premier appareil de communication (120) est situé, et d'une valeur TA maximale, dans lequel le premier paramètre est un rayon de cellule, et le premier paramètre est le même que l'un d'au moins un rayon de cellule correspondant à l'un groupe de préambules déterminé à partir des $K_G$ groupes de préambules.

Network device

A terminal device 3 sends a preamble corresponding to that v=3

A terminal device 1 sends a preamble corresponding to that v=1

A terminal device 0 sends a preamble corresponding to that v=0

A terminal device 2 sends a preamble corresponding to that v=2

FIG. 1

Location of a time-domain channel corresponding to a preamble of a terminal device 0

Location of a time-domain channel corresponding to a preamble of a terminal device 1

Location of a time-domain channel corresponding to a preamble of a terminal device 2

Location of a time-domain channel corresponding to a preamble of a terminal device 3

Delay due to a transmission delay

Time-domain channel region 0

Time-domain channel region 1

Time-domain channel region 2

Time-domain channel region 3

Time

FIG. 2

Network device

A terminal device 4 sends a preamble corresponding to that v=7

A terminal device 1 sends a preamble corresponding to that v=1

A terminal device 0 sends a preamble corresponding to that v=0

FIG. 3

Location of a time-domain channel corresponding to a preamble of a terminal device 0

Location of a time-domain channel corresponding to a preamble of a terminal device 1

Location of a time-domain channel corresponding to a preamble of a terminal device 4

Time-domain channel region 0 | Time-domain channel region 1 | Time-domain channel region 2 | Time-domain channel region 3 | Time-domain channel region 4 | Time-domain channel region 5 | Time-domain channel region 6 | Time-domain channel region 7

Time

FIG. 4

FIG. 5

FIG. 6

Terminal device 501

FIG. 7

Terminal device

Network device

S801: Obtain first information

S802: Determine one group of preambles from $K_G$ groups of preambles based on the first information

S803: First preamble

S804: Determine a first time-domain channel based on the first preamble

S805: Determine, based on a correspondence between $N_{CS}$ regions of the first time-domain channel and cyclic shift indexes of the $K_G$ groups of preambles, a cyclic shift index and a group sequence number that are of the first preamble

FIG. 8

EP 4 462 933 B1

$0^{th}$ cyclic shift   $1^{st}$ cyclic shift   $2^{nd}$ cyclic shift   $3^{rd}$ cyclic shift   $4^{th}$ cyclic shift   $5^{th}$ cyclic shift   $6^{th}$ cyclic shift   $7^{th}$ cyclic shift

Time

$0^{th}$ region of a first time-domain channel | $1^{st}$ region of the first time-domain channel | $2^{nd}$ region of the first time-domain channel | $3^{rd}$ region of the first time-domain channel | $4^{th}$ region of the first time-domain channel | $5^{th}$ region of the first time-domain channel | $6^{th}$ region of the first time-domain channel | $7^{th}$ region of the first time-domain channel

FIG. 9

$7^{th}$ cyclic shift   $0^{th}$ cyclic shift   $1^{st}$ cyclic shift   $2^{nd}$ cyclic shift   $3^{rd}$ cyclic shift   $4^{th}$ cyclic shift   $5^{th}$ cyclic shift   $6^{th}$ cyclic shift

$0^{th}$ region of a first time-domain channel | $1^{st}$ region of the first time-domain channel | $2^{nd}$ region of the first time-domain channel | $3^{rd}$ region of the first time-domain channel | $4^{th}$ region of the first time-domain channel | $5^{th}$ region of the first time-domain channel | $6^{th}$ region of the first time-domain channel | $7^{th}$ region of the first time-domain channel

Time

FIG. 10

```
┌─────────────────┐                              ┌─────────────────┐
│ Terminal device │                              │ Network device  │
└────────┬────────┘                              └────────┬────────┘
         │                                                │
  ┌──────┴──────────────┐                                 │
  │ S1101: Obtain first │                                 │
  │     information     │                                 │
  └──────┬──────────────┘                                 │
┌────────┴─────────────────────────────────┐             │
│ S1102: Determine a first TA value based   │             │
│ on the first information, and determine,  │             │
│ based on the first TA value, first time   │             │
│ at which a first preamble is sent to the  │             │
│            network device                 │             │
└────────┬─────────────────────────────────┘             │
         │        S1103: First preamble                   │
         │ ─────────────────────────────────────────────▶ │
         │                               ┌────────────────┴──────────────┐
         │                               │ S1104: Determine a first time-│
         │                               │  domain channel based on the  │
         │                               │        first preamble         │
         │                               └────────────────┬──────────────┘
         │                        ┌────────────────────────┴──────────────────┐
         │                        │ S1105: Determine a cyclic shift index of   │
         │                        │ the first preamble based on a correspondence│
         │                        │ between N_CS regions of the first time-domain│
         │                        │ channel and cyclic shift indexes of preambles│
         │                        └────────────────────────┬──────────────────┘
         │                        ┌────────────────────────┴──────────────────┐
         │                        │ S1106: Determine a second TA value based on│
         │                        │ the cyclic shift index and a root index    │
         │                        │     that are of the first preamble         │
         │                        └────────────────────────┬──────────────────┘
         │          S1107: Second TA value                 │
         │ ◀───────────────────────────────────────────── │
         │                                                 │
```

FIG. 11

```
┌────────────────────────────────────────────────┐
│  Communication apparatus                    120 │
│                                                 │
│      ┌──────────────────────────┐               │
│      │   Transceiver module 121 │               │
│      └────────────┬─────────────┘               │
│                   │                             │
│      ┌────────────┴─────────────┐               │
│      │   Processing module  122 │               │
│      └──────────────────────────┘               │
│                                                 │
└────────────────────────────────────────────────┘
```

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020137807 A1
- WO 2021026931 A1